# EUROPEAN PATENT APPLICATION

(11) **EP 2 190 130 A1**
(43) Date of publication of application: **26.05.2010**
(21) Application number: 08800526.9
(22) Date of filing: 25.08.2008
(51) Int. Cl.: H04B 7/04

(54) **INFORMATION FEEDBACK METHOD, SYSTEM, USER DEVICE, AND BASE STATION BASED ON SPACE, TIME AND FREQUENCY DOMAIN**

(30) Priority: 12.09.2007 CN 200710148914
(71) Applicant: Sharp Kabushiki Kaisha, Osaka (JP)
(72) Inventor: LIANG, Yongming, Chiba-shi Chiba 261-8520 (JP); LIU, Renmao, Shanghai 201203 (CN); YAN, Chongguang, Shanghai 201203 (CN); DING, Ming, Shanghai 201203 (CN)
(74) Representative: Müller - Hoffmann & Partner
(86) International application number: PCT/CN2008/001525
(87) International publication number: WO 2009/033358

(57) **Abstract**

A space-time-frequency domain based information feedback method, system, user equipment and base station for wireless transmission technical fields is provided. The user equipment measures and evaluates quality of wireless transmission downlinks in MIMO system, obtains rank, precoding matrix index and channel quality indicator information in the wireless transmission downlinks, processes information of the wireless transmission downlink respectively in space domain, frequency domain and time domain by using space selectivity, frequency selectivity and time selectivity characteristics of a channel, and feeds back downlink information to the base station through uplinks by using feedback schemes. The base station optimizes a transmitter according to feedback information from the user equipment.

## Description

### TECHNICAL FIELD

The present invention relates generally to information feedback method and system in wireless communications. More specifically, the present invention relates to a space-time-frequency three-dimensional domain based information feedback method, system, user equipment and base station in a downlink MIMO system for wireless transmission technologies.

### BACKGROUND ART

Wireless communication services develop rapidly and user number exponentially increases nowadays. However, a main challenge for the wireless services still is whether the wireless services are able to provide high rate and high performance services. People expect improving capacity of wireless cells by Orthogonal Frequency Division Multiplexing (OFDM) technology and Multiple Input Multiple Output (MIMO) technology, thus overall data throughput and edge data throughput of the wireless cell become important indexes for scaling quality of service of the wireless cells. Because MIMO may achieve high data throughput, IMT-2000 (International Mobile Telecommunications-2000) standard in the 3rd Generation Partnership Project (3GPP) has considered adopting MIMO technology. In the 3rd generation mobile communication technologies, a base station (BS) makes use of channel state information (CSI) fed back from a user equipment (UE) and changes data transmission rate of transmitter of the base station through adaptive modulation-coding technology. At present, in Super third generation (S3G) cellular mobile communication system, IEEE 802.16 system and WiMAX wireless local area network system defined by LTE (Long Term Evolution) Committee, a method in which the base station uses feedback information from the user equipment to optimally design the transmitter so as to highly improve spectrum utilization efficiency is still very popular. Accordingly, many companies propose precoding based MIMO transmission methods, i.e., closed-loop transmission methods, which allow using channel feedback information to improve the system performance. Nevertheless, if each user equipment feeds back too much channel information (including Rank of MIMO, Precoding Matrix Index and Channel Quality Indicator (CQI)), the total feedback information will be a very large number which undoubtedly will increase overhead of feedback uplinks and thus lead to low spectrum utilization efficiency such that quality of service (QoS) of the wireless cell will be affected heavily. Therefore, reducing information amount of feedback information without deteriorating or slightly impairing MIMO system performance is an important issue in closed-loop precoding MIMO system. Codebook based information feedback method creates tradeoff and balance between the air feedback overhead and the closed-loop MIMO system performance. Designing and utilizing flexible information feedback method is a kind of attempt and effort for establishing above tradeoff and balance. Predominant information feedback method may reduce overhead of feedback information without deteriorating or slightly impairing MIMO system performance, and channel characteristic in respect of space-time-frequency three-dimensional domain may reduce the information feedback amount. Therefore, high effective or adaptive feedback methods may be adopted based on channel characteristic in respect of space-time-frequency three-dimensional domain so as to achieve gain on feedback information and system performance.

Motorola Inc. (USA) released Document R1-070779 "CQI Feedback Scheme for E-UTRA" during 3GPP TSG RAN Meeting No.48 on February 12-16, 2007 in St. Louis, USA. This document mentions several typical CQI feedback schemes including bitmap feedback scheme, best CQI number feedback scheme and hybrid feedback scheme. This document provides the CQI feedback scheme mainly based on time-frequency two-dimensional domain, which does not take into account space-selectivity and frequency-selectivity of channels and does not fully utilize time-selectivity of channels. Therefore, there is possibility to further reduce the CQI feedback amount.

Samsung Inc. (Korea) released Document R1-070133 "MINO System Performance with Variable Frequency Granularity of UE feedback" during 3GPP TSG RAN1 Meeting No.47 on January 15-19, 2007 in Sorrento, Italy. This document mentions mapping relationships among rank of MIMO system, layer and codeword and a CQI feedback method. However, this document does not take into account channel characteristics in space domain, frequency domain and time domain and does not fully utilize the channel selectivity in space-time-frequency three-dimensional domain. Similarly, there is possibility to further reduce the CQI feedback amount. Therefore, there is a need for a space-time-frequency three-dimensional domain based information feedback method and system in downlink MIMO system, and it is necessary to design a high effective and simple information feedback method by adequately utilizing properties such as space-selectivity, frequency-selectivity and time-selectivity of channels in space domain, frequency domain and time domain to reduce overhead of rank of MIMO system, index of precoding codebook (precoding matrix index), CQI information and so on in feedback links so that spectrum utilization efficiency in uplinks is improved, user equipment power is saved and wireless cell performance is optimized.

### SUMMARY OF INVENTION

The present invention aims to overcome deficiencies of prior arts and provides a space-time-frequency three-dimensional domain based information feedback method and system in downlink MIMO system, which sufficiently utilizes channel selectivity characteristics in space-time-frequency three-dimensional domain, reduces feedback information amount on a basis of guaranteeing service quality of a wireless cell and is easy to be realized.

The present invention is implemented as follows. The present invention configures different MIMO schemes to different user equipments according to moving speeds and path losses of the user equipments so as to reduce feedback information for rank of MIMO system, designs and utilizes high efficient and simple feedback scheme of precoding matrix index (PMI) according to space selectivity characteristics of channels to reduce air feedback overhead of the precoding matrix index, designs and utilizes high efficient and simple CQI feedback scheme in frequency domain according to frequency selectivity characteristics of channels so as to reduce CQI feedback information in the frequency domain, and designs and utilizes high efficient and simple CQI feedback scheme in time domain according to time selectivity characteristics of channels so as to reduce CQI feedback information in the time domain. Finally a base station optimally designs a transmitter according to feedback information in uplinks so as to improve the service quality of the wireless cell.

The method of the present invention will be further explained, which comprises following steps.
1. The base station measures path losses of different user equipments in a cellular cell, divides the user equipments into center user equipments and edge user equipments according to measurement results, and, for neighboring wireless cells, allocates different frequency bands to the center user equipment and edge user equipment in respective wireless cells so as to reduce interference from the neighboring wireless cell.
2. The center user equipment and the edge user equipment report moving speeds of themselves to the base station and the base station decides open-loop and closed-loop schemes according to the moving speeds of the center user equipment and the edge user equipment such that the center user equipment or edge user equipment with high moving speed adopts the open-loop MIMO scheme and the center user or edge user with low moving speed adopts the closed-loop MIMO scheme.
3. For the center user equipment or the edge user equipment adopting the closed-loop scheme, the base station further decides MIMO schemes including SU-MIMO (single user MIMO), MU-MIMO (multiple users MIMO, beam-forming and etc according to the path losses of the center user equipment or the edge user equipment.
4. The center user equipment or the edge user equipment decides information feedback scheme of itself according to space selectivity characteristics of channels.
   If a channel is a space-selective channel, each resource block of the center user equipment or the edge user equipment is space-non-coherent in respect of respective angles in a space domain. Therefore, the center user equipment in each , resource block of the center user equipment adopts best precoding matrix index information feedback scheme when feeding back an angle (i.e., the precoding matrix index), i.e., feeding back the angle with the best CQI performance, and the edge equipment in each resource block of the edge user equipment adopts adaptive information feedback scheme when feeding back the angle. In the adaptive information feedback scheme, a reference value for PMIs of all resource blocks at an initial timing is fed back, then the user equipment in the first resource block feeds back a variation value of the first PMI compared with the reference value, the user equipment in the second resource block feeds back a variation value of the second PMI compared with the reference value, and at the next timing, if the PMI of the resource block does not change or only changes slightly (lower than a predetermined threshold), the variation value will not be fed back. The same feedback scheme is applicable to all resource blocks and accordingly feedback information amount of PMI is reduced greatly. If the channel is a space-nonselective channel, each resource block of the center user equipment or the edge user equipment is space-coherent in respect of respective angles in the space domain. Therefore, the center user equipment in each resource block of the center user equipment adopts improved best precoding matrix index information feedback scheme, i.e., best PMI of resource block group based information feedback scheme, when feeding back the angle (the precoding matrix index), and the edge user equipment in each resource block of the edge user equipment adopts adaptive information feedback scheme when feeding back the angle (PMI). In the adaptive information feedback scheme, several neighboring resource blocks in spatial position are grouped into a resource block group, a reference value for PMIs of all resource block groups at an initial timing is fed back, then the user equipment in the first resource block group feeds back a variation value of the first PMI compared with the reference value, the user equipment in the second resource block group feeds back a variation value of the second PMI compared with the reference value, and at the next timing, if the PMI of the resource block group does not change or only changes slightly (lower than a predetermined threshold), the variation value will not be fed back. The same feedback scheme is applicable to all resource block groups and accordingly feedback information amount of PMI is reduced greatly. The predetermined threshold is determined by the user or obtained through calculations according to actual PMI levels. On the other hand, because long time error accumulation causes the feedback precision to decrease and the feedback expense to increase, every certain time period passes, a PMI reference value for all resource blocks or resource block groups in that timing may be fed back again to correct long time error accumulation effect.
5. The center user equipment or the edge user equipment decides the information feedback scheme of itself according to frequency selectivity characteristics of channels.
   If a channel is a frequency-selective channel, each resource block of the center user equipment or the edge user equipment is frequency-non-coherent in respect of respective frequency bands of a whole frequency bandwidth. Therefore, the center user equipment in each resource block of the center user equipment adopts best CQI feedback scheme when feeding back the CQI (channel quality indicator), i.e., feeding back the CQI of a resource block with the best CQI performance, and the edge user equipment in each resource block of the edge user equipment adopts adaptive information feedback scheme when feeding back the CQI. In the adaptive information feedback scheme, a reference value for CQIs of all resource blocks at an initial timing is fed back, then the user equipment in the first resource block feeds back a variation value between the first CQI and the reference value, the user equipment in the second resource block feeds back a variation value between the second CQI and the reference value, and at the next timing, if the CQI of the resource block does not change or only changes slightly (lower than a predetermined threshold), the variation value will not be fed back. The same feedback scheme is applicable to all resource blocks and accordingly feedback information amount of CQI is reduced greatly. If the channel is a frequency-nonselective channel, each resource block of the center user equipment or the edge user equipment is frequency-coherent in respect of respective frequency bands. Therefore, the center user equipment in each resource block of the center user equipment adopts improved best channel quality indicator information feedback scheme when feeding back the CQI, i.e., best CQI of resource block group based information feedback scheme, and the edge user equipment in each resource block of the edge user equipment adopts adaptive information feedback scheme when feeding back the CQI. In the adaptive information feedback scheme, several neighboring resource blocks in frequency band location are grouped into a resource block group, a reference value for CQIs of all resource block groups at an initial timing is fed back, then the user equipment in the first resource block group feeds back a variation value of the first CQI compared with the reference value, the user equipment in the second resource block group feeds back a variation value of the second CQI compared with the reference value, and at the next timing, if the CQI of the resource block group does not change or only changes slightly (lower than a predetermined threshold), the variation value will not be fed back. The same feedback scheme is applicable to all resource block groups and accordingly feedback information amount of CQI is reduced greatly. The predetermined threshold is determined by the user or obtained through calculations according to actual CQI levels. On the other hand, because long time error accumulation causes the feedback precision to decrease and the feedback expense to increase, every certain time period passes, a CQI reference value for all resource blocks or resource block groups in that timing may be fed back again to correct long time error accumulation effect.
6. The center user equipment or the edge user equipment decides the information feedback scheme of itself according to time selectivity characteristics of channels.
   If a channel is a time-selective channel, each resource block of the center user equipment or the edge user equipment is time-non-coherent. If the channel is a time-non-selective channel, each resource block of the center user equipment or the edge user equipment is time-coherent. For the time selective channel, the center user equipment may adopt the best CQI feedback scheme in every transmission time interval (TTI) and the edge user equipment may also adopt adaptive feedback scheme in every TTI. In the adaptive information feedback scheme, a reference value for CQIs of all resource blocks in an initial TTI is fed back; then in the first TTI the user equipment in the first resource block feeds back a variation value of the first CQI compared with the reference value and the user equipment in the second resource block feeds back a variation value of the second CQI compared with the reference value; and in the next TTI, if the CQI of the resource block does not change or only changes slightly (lower than a predetermined threshold), the variation value will not be fed back. The same feedback scheme is applicable to all resource blocks and accordingly feedback information amount of CQI is reduced greatly. For the time nonselective channel, the center user equipment may adopt improved best CQI feedback scheme in every TTI and the edge user equipment may also adopt adaptive feedback scheme in every TTI. In the adaptive information feedback scheme, several neighboring resource blocks in frequency band location are grouped into a resource block group, a reference value for CQIs of all resource block groups in an initial TTI is fed back, then in the first TTI the user equipment in the first resource block group feeds back a variation value of the first CQI compared with the reference value and the user equipment in the second resource block group feeds back a variation value of the second CQI compared with the reference value, and in the next TTI, if the CQI of the resource block group does not change or only changes slightly (lower than a predetermined threshold), the variation value will not be fed back. The same feedback scheme is applicable to all resource block groups and accordingly feedback information amount of CQI is reduced greatly. In order to simplify complexity of the feedback scheme in time domain, adaptive information feedback scheme may be adopted in the time domain for both the time-selective channel and the time-nonselective channel. This adaptive information feedback scheme may configure resource block based CQI adaptive feedback scheme for the time-selective channel and configure resource block group based CQI adaptive feedback scheme for the time-nonselective channel. The predetermined threshold is determined by the user or obtained through calculations according to actual CQI levels. On the other hand, because long time error accumulation causes the feedback precision to decrease and the feedback expense to increase, a CQI reference value for all resource blocks or resource block groups in that TTI, after every certain time period passes, may be fed back again to correct long time error accumulation effect.
7. The base station optimally designs the transmitter according to space-time-frequency three-dimensional domain feedback information reported by the center user equipment and edge user equipment.
8. The base station calculates overall throughput and edge throughput of the wireless cell, measures and evaluates service quality of the wireless cell and reports it to upper-layer information management system.

The present invention provides space-time-frequency three-dimensional domain based information feedback method and system in downlink MIMO system, which configures the MIMO schemes of the user equipments according to the moving speeds and path losses of the user equipments, and designs high efficient and simple information feedback method by respectively using space selectivity characteristics, frequency selectivity characteristics and time selectivity characteristics of channels so as to reduce overhead of the feedback information while improving frequency spectrum efficiency of uplinks and the service quality of the wireless cell. Therefore, the space-time-frequency three-dimensional domain based information feedback method and system in downlink MIMO system is high efficient, simple, convenient and flexible, which is applicable to closed-loop MIMO transmission schemes for systems such as Third Generation (3G), Super Third Generation (S3G), Fourth Generation (4G) cellular mobile communication and digital televisions, wireless local area network (WLAN), wireless wide area network (WWAN), and etc.

### BRIEF DESCRIPTION OF THE DRAWINGS

The foregoing and other objectives, features, and advantages of the invention will be more readily understood upon consideration of the following detailed description of the invention, taken in conjunction with the accompanying drawings.
Figure 1 is a schematic drawing illustrating MIMO schemes of a user equipment in a wireless cell;
Figure 2 is a schematic diagram illustrating an information feedback scheme;
Figure 3 is a structure form drawing illustrating feedback information;
Figures 4a-4d are flowcharts illustrating space-time-frequency three-dimensional domain based information feedback method;
Figure 5 is a schematic diagram illustrating FDM resource scheduling;
Figure 6 is a schematic drawing illustrating a space-selective channel;
Figure 7 is a schematic drawing illustrating a space-nonselective channel;
Figure 8 is a schematic drawing illustrating selection of precoding matrix index;
Figure 9 is a schematic diagram illustrating feedback of precoding matrix index of the space-selective channel;
Figure 10 is a schematic drawing illustrating resource block (RB) based adaptive precoding matrix index feedback;
Figure 11 is a schematic diagram illustrating feedback of precoding matrix index of the space-nonselective channel;
Figure 12 is a structure form drawing illustrating feedback information of the precoding matrix index of the space-nonselective channel;
Figure 13 is a schematic diagram illustrating time domain feedback scheme;
Figure 14a is a schematic drawing illustrating a frequency-selective channel;
Figure 14b is a schematic drawing illustrating a frequency-nonselective channel;
Figure 15 is a schematic diagram illustrating time-frequency domain feedback scheme in an scenario of frequency-selective channel;
Figure 16 illustrates a schematic diagram illustrating time domain feedback scheme;
Figure 17 is a schematic diagram illustrating time-frequency domain feedback scheme in an scenario of frequency-nonselective channel;
Figure 18 is a schematic drawing illustrating a first example of codeword based space mapping relationship in MIMO system;
Figure 19 is a schematic drawing illustrating a second example of codeword based space mapping relationship in MIMO system;
Figure 20 is a schematic drawing illustrating a third example of codeword based space mapping relationship in MIMO system;
Figure 21 a schematic drawing illustrating a fourth example of codeword based space mapping relationship in MIMO system;
Figure 22 a schematic drawing illustrating a fifth example of codeword based space mapping relationship in MIMO system;
Figure 23 a schematic drawing illustrating a sixth example of codeword based space mapping relationship in MIMO system;
Figure 24 a schematic drawing illustrating a seventh example of codeword based space mapping relationship in MIMO system;
Figure 25 a schematic drawing illustrating an eighth example of codeword based space mapping relationship in MIMO system;
Figure 26 an integral block diagram illustrating space-time-frequency three-dimensional domain based information feedback system; and
Figure 27 is a function diagram illustrating space-time-frequency three-dimensional domain based information feedback system according to the present invention.

### DESCRIPTION OF EMBODIMENTS

Preferred embodiments will be explained by referring to the accompanying drawings. Unnecessary parts and functions for the present invention will be omitted for brevity so as to avoid confusion in understanding.

The detailed implementations of the invention will be explained in conjunction with the accompanying drawings.

### (1) Structure of a wireless cell

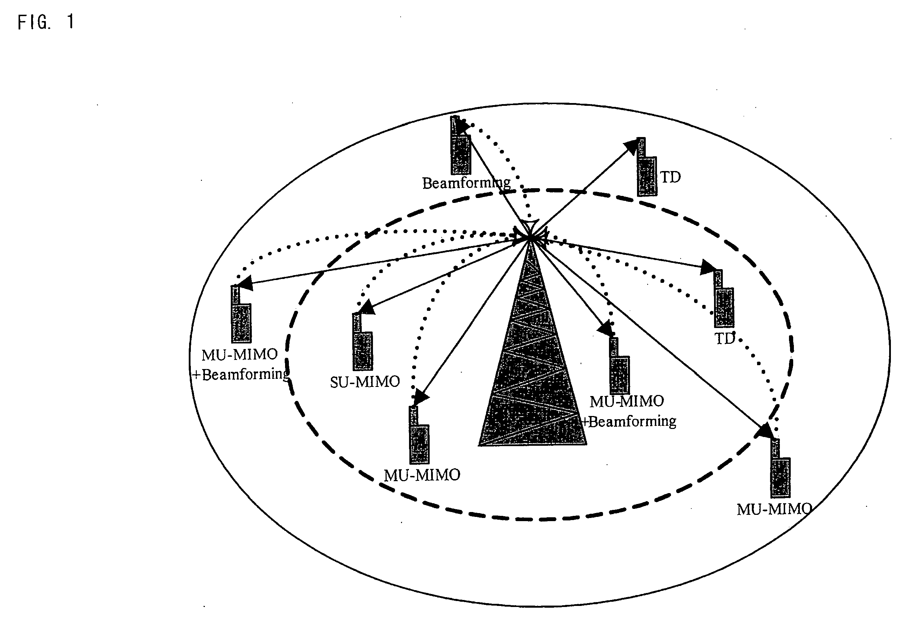

Figure 1 illustrates structure of a wireless cell. In the present invention there are one base station (BS) and a plurality of user equipments (UEs) within one wireless cell, in which the BS divides UEs into center user equipments (shown as UEs located within a dashed circle) and edge user equipments (shown as UEs located outside of the dashed circle).

### (2) Precoding based closed-loop MIMO system structure

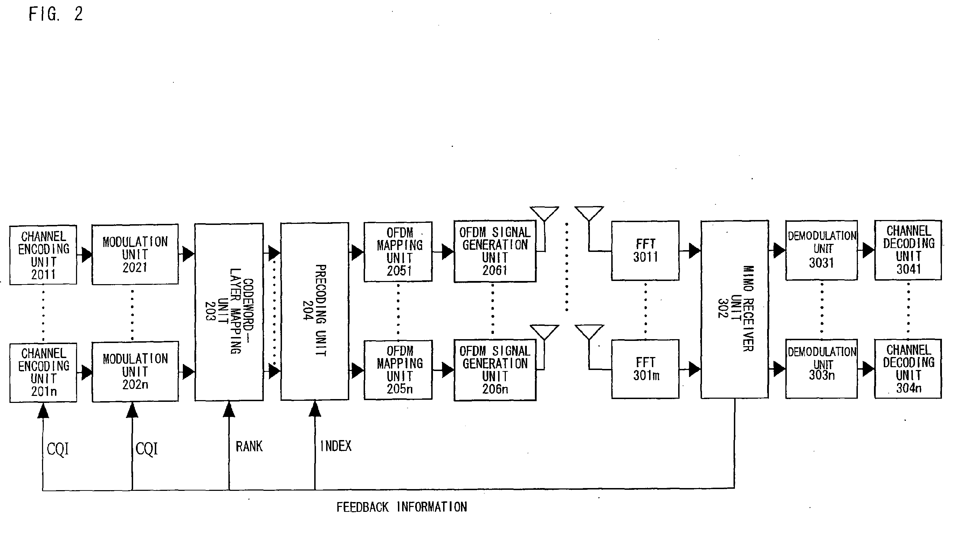

Figure 2 illustrates precoding based closed-loop MIMO system in downlinks of the wireless cell according to the present invention, in which a plurality of center UEs and edge UEs in the downlink MIMO system may adopt different MIMO schemes. Original transmission signal in a transmitter is channel encoded in channel encoding units 2011-201n, modulated in modulation units 2021-202n and mapped from codeword to layer in codeword-layer mapping units 203-203n, and the mapped symbols are precoded in precoding units 204-204n, subject to OFDM mapping in OFDM mapping units 2051-205n and sent to OFDM signal generation units 2061-206n. A receiver performs Fast Fourier Transform (FFT) for received signal in FFT units 3011-301n and sends the resulted signal to MIMO receiver 302-302n before being subject to demodulation in demodulation unit 3031-303n and channel decoding in channel decoding units 3041-304n. The MIMO receiver feeds back feedback information such as CQI (channel quality indicator), Rank and Precoding matrix index to modules such as the channel encoding units 2011-201n, modulation units 2021-202n, codeword-layer mapping units 203-203n and precoding units 204-204n.

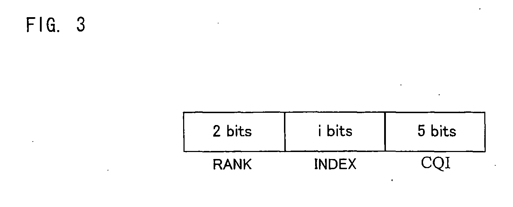

As shown in Figure 1, MIMO scheme includes closed-loop MIMO scheme and open-loop MIMO scheme. The closed-loop MIMO scheme includes single user MIMO (SU-MIMO), multiple users MIMO (MU-MIMO), Beam-forming user, multiple users MIMO and Beam-forming user (MU-MIMO+Beam-forming), etc. The open-loop MIMO scheme includes open-loop transmit diversity user (Open-Loop TD). UE adopting closed-loop MIMO scheme needs to feed back channel feedback information to BS through uplinks and BS performs precoding, resource scheduling, transmitter optimization and etc according to the feedback information reported by the UE. The feedback information includes Rank of MIMO, Precoding codebook index (Precoding matrix index) and channel quality indicator (CQI). Figure 3 shows structure form of the feedback information in which the rank is represented with 2 bit information and CQI is represented with 5 bit information.

### (3) BS clarifies UEs according to path loss

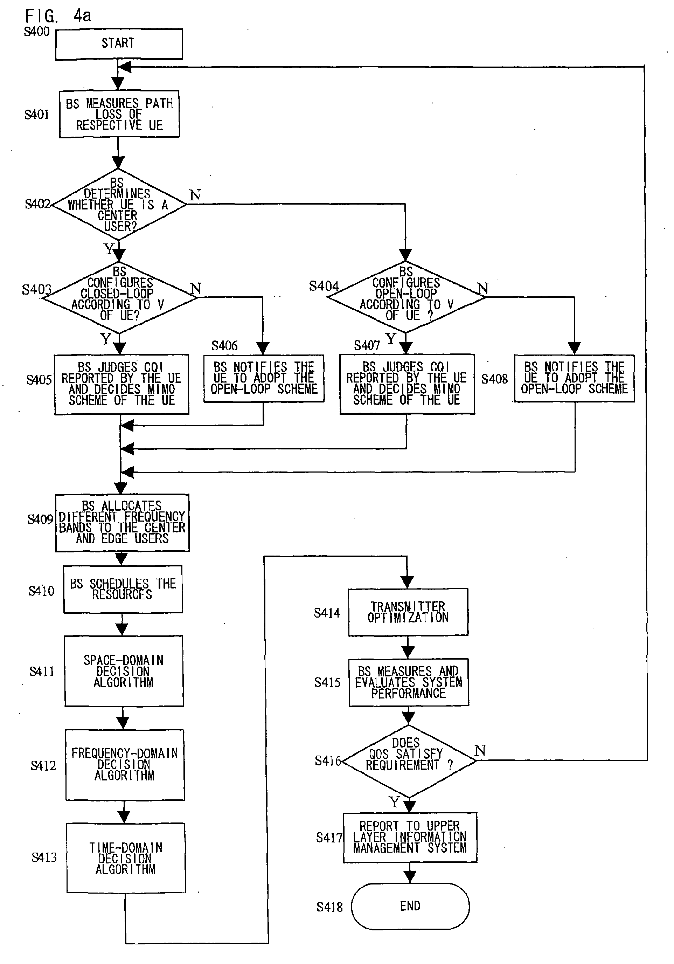

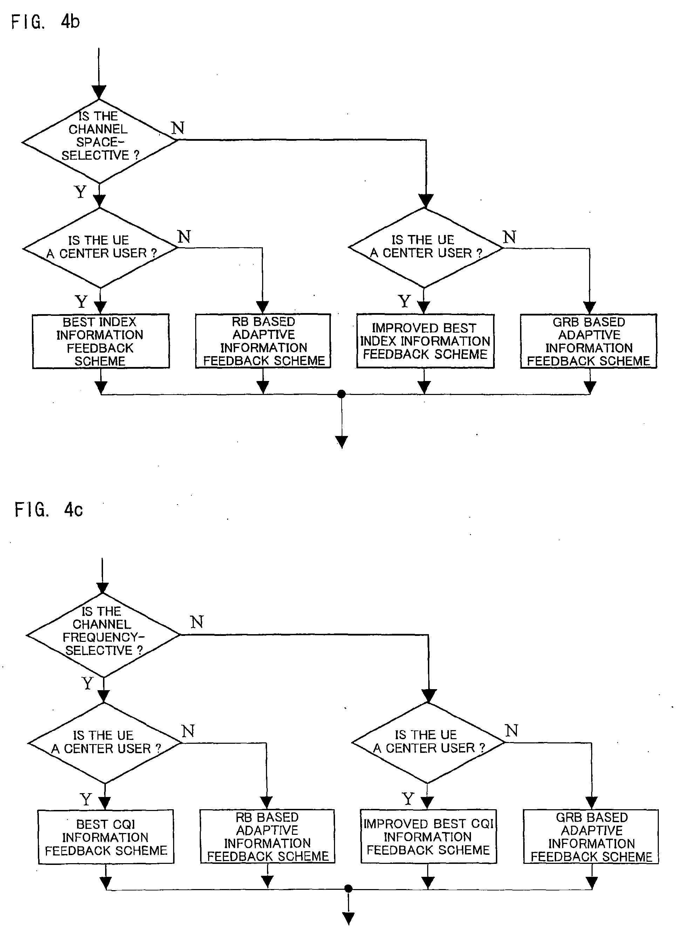

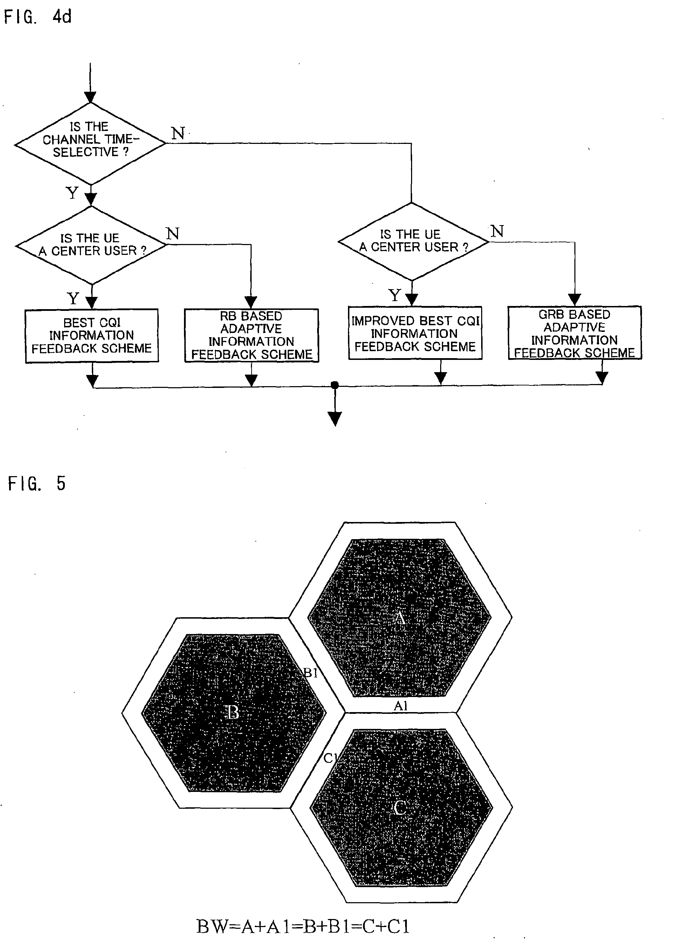

Since UEs are located in different environments within the wireless cell, the BS measures path loss of all UEs (S401) and classify all UEs based on the measurement result (S402) as shown in Figures 4a, 4b, 4c and 4d. The BS sets a path loss threshold such that the UE whose path loss is lower than the threshold is a center UE and the UE whose path loss is higher than the threshold is an edge UE.

### (4) BS decides MIMO scheme of UE according to moving speed

Since different UEs have different moving speeds and the channel scenario change of the same UE in case of high moving speed (v) is intenser than that in case of low moving speed, the UE with high moving speed needs to feed back larger amount of channel information than the UE with low moving speed. In order to save signaling overhead and avoid overfrequency channel feedback, in the present invention, the BS notifies the high speed UE to adopt open-loop MIMO scheme and the low speed UE to adopt closed-loop MIMO scheme through signaling. Assuming that the UE whose moving speed is 100km/h or higher is defined as high speed UE, the high speed UE shall adopt open-loop transmit diversity based MIMO scheme, and assuming that the UE whose speed is lower than 100km/h is defined as low speed UE, the low speed UE shall adopt one of closed-loop MIMO schemes including SU-MIMO, MU-MIMO, Beam-forming, multi users MIMO combining beam-forming and etc (S403-S408).

### (5) BS performs resource scheduling

The BS allocates resources for the center UE and the edge UE and performs resource scheduling (S409 and S410). Different wireless cells may adopt FDM (Frequency Division Multiplexing) scheme between each other so that edge UEs of neighboring cells have different frequency bands in order to prevent occurrence of co-frequency interference.

It is assumed that frequency bandwidths of three wireless cells are all BW as shown in Figure 5 in which black areas denote areas that center UEs locate and white areas denote areas that edge UEs locate. The three base stations configure neighboring areas to be in different frequency bands, i.e., there are no intersections among three frequency bands A1, B1 and C1, such that the occurrence of co-channel interference can be prevented.

### (6) Space-selectivity based precoding matrix index feedback method

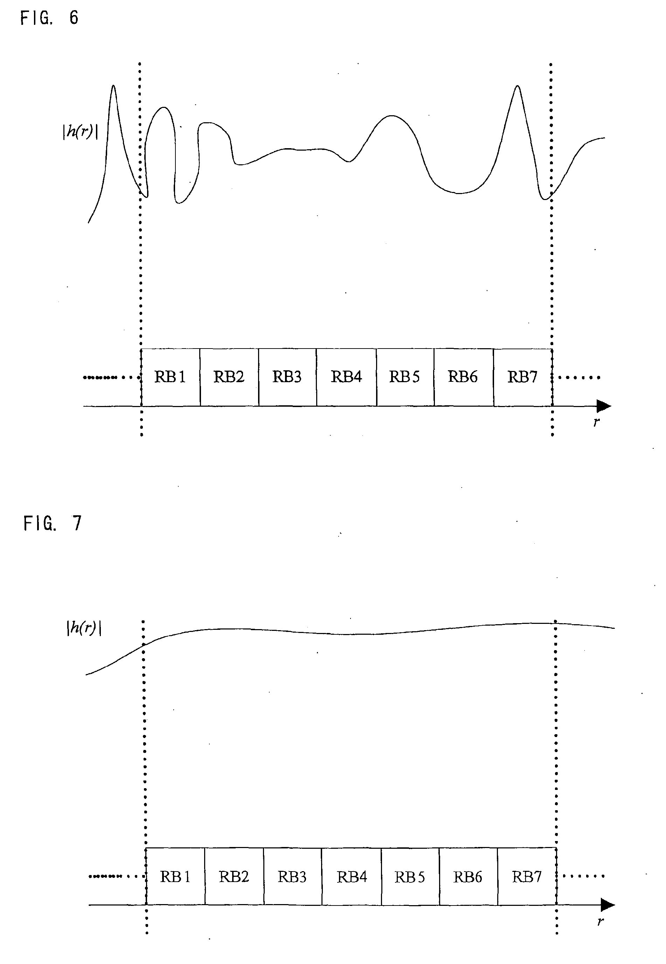

In practical wireless communications, the transmitter and the receiver work in space-time-frequency three-dimensional domain, so there may exist a phenomenon that multi-path waves arrive at the receiver at different angles in space. These multi-path waves may lead to advantageous protuberance interference and disadvantageous concave interference such that received signal power is not invariable when the receiver location r is subject to a small change, whereupon such channels exhibit space-selectivity. At such time, space-selectivity attenuations of neighboring resource blocks (RB) are different from each other as shown in Figure 6.

If the received signal power caused by the multi-path waves is invariable when the receiver location r is subject to a small change, such channels will exhibit space-non-selectivity. At such time, space-selectivity attenuations of neighboring resource blocks (RB) are the same as or similar to each other as shown in Figure 7.

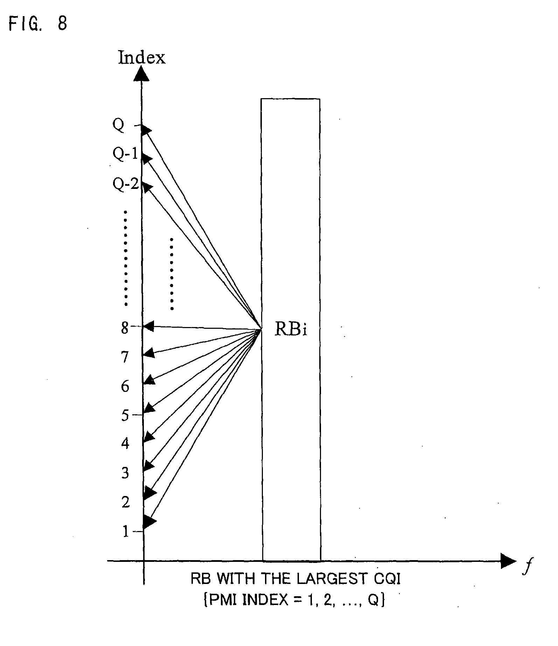

Therefore, space-selectivity and space-non-selectivity may be sufficiently utilized when UE feeds back codebook precoding matrix index of a precoder. As shown in Figure 8, the precoding matrix index with the best CQI will be selected for the resource blocks (RB) or resource block group (GRB) as a precoding matrix index to be fed back. The precoding matrix index Q is decided by the codebook of the precoder in the transmitter. If the codebook is represented by 3 bits, maximum value of Q will be 2³; if the codebook is represented by 4 bits, the maximum value of Q will be 2⁴; and if the codebook is represented by 5 bits, the maximum value of Q will be 25.

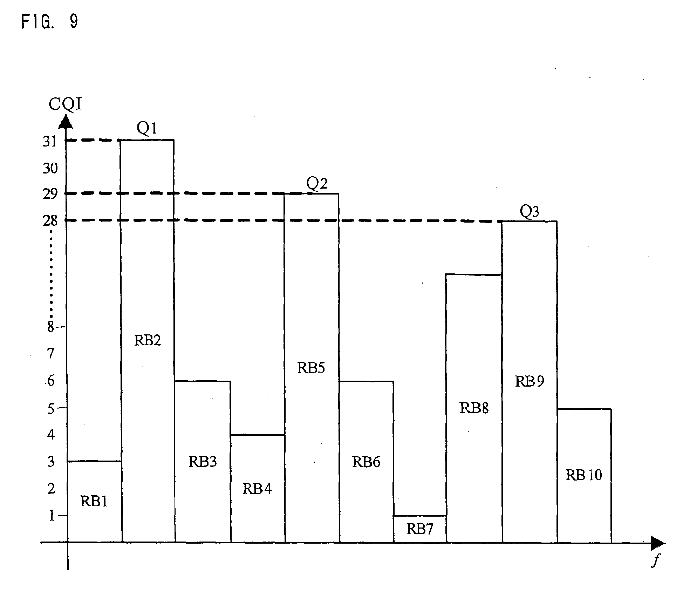

In case that the channel is a space-selective channel, different RBs will exhibit different space characteristics for structured precoding codebook. Since a center user equipment requires relatively high data throughput, the center user equipment in each RB of the center user equipment adopts the best precoding matrix index based information feedback scheme (as shown in Figure 4b, Step 411). The precoding matrix index with the best CQI is selected for each RB from all precoding matrix indexes and is used as a feedback precoding matrix index. As shown in Figure 9, if three RBs' CQIs are needed to be fed back, three resource blocks (RB2, RB5, RB9) with best CQIs are found out sequentially, and the precoding matrix indexes (Q1, Q2, Q3) of these three RBs are used as feedback precoding matrix indexes.

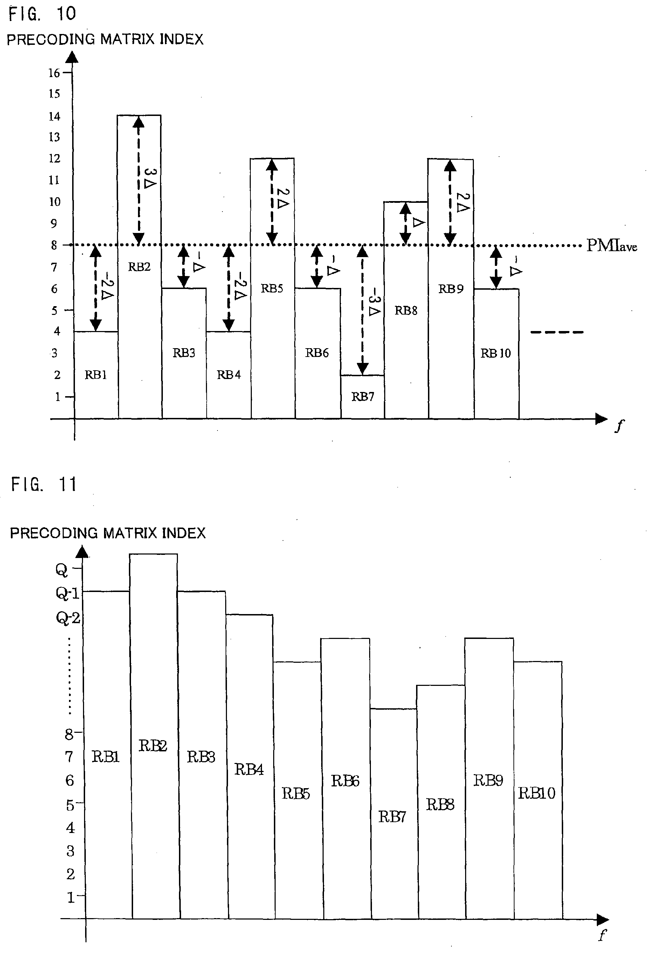

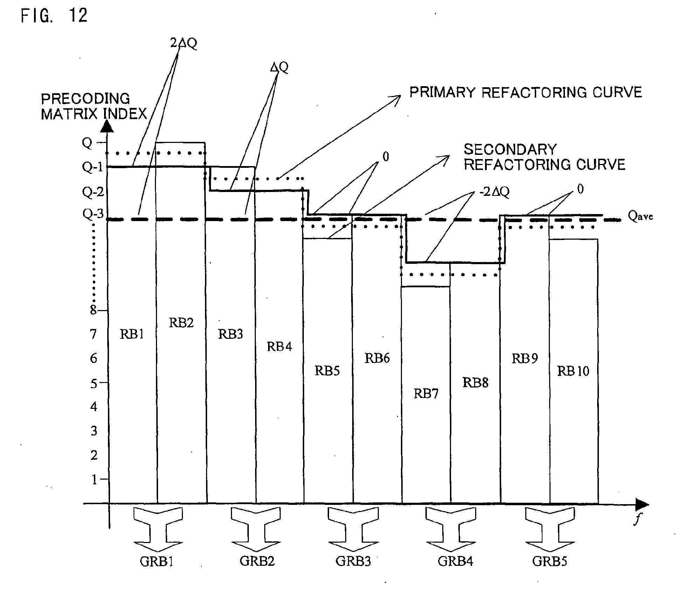

On the other hand, since an edge user equipment requires relatively low data throughput, resource block based adaptive information feedback scheme may be adopted for each RB of the edge user equipment (as shown in Figure 4b, Step 411). The resource block based adaptive information feedback scheme reduces feedback amount by sacrificing feedback precision. As shown in Figure 10, an average value of the precoding matrix indexes (PMI) of all RBs (PMIave, corresponding to above mentioned reference value, however, the present invention is not limited to the average value of PMIs, the reference value may be a random value designated by the user, PMI value of the first or any RN or GRB, or a numerical value deduced from PMI of individual or some RB or GRB) at an initial timing is firstly fed back. The average value of the precoding matrix indexes is a mathematical average value of the precoding matrix indexes of all RBs. If it is defined that there are 16 levels of precoding matrix indexes, the average value in Figure 10 will be 8. Thereafter variation values between the precoding matrix index of each RB and the average value are fed back. In case that the channel is a space-non-selectivity channel, neighboring RBs will exhibit the same or similar space characteristics for structured precoding codebook. Accordingly, neighboring RBs may constitute a RB group (GRB) as shown in Figure 11. Feeding back the precoding matrix index in the way of GRB may greatly save feedback amount. Moreover, because neighboring GRBs have the same or similar space characteristics, improved best precoding matrix index based information feedback scheme may be adopted for the center UE. As shown in Figure 12, a precoding matrix index curve of the RBs is orderly subject to primary refactoring and secondary refactoring and thus a new precoding matrix index curve is obtained in which GRB1 comprises two resource blocks RB1 and RB2. Average value of the precoding matrix indexes of RB1 and RB2 may be obtained after the primary refactoring, however, this average value probably is not an integer or not falling into valued field of quantization value of the precoding matrix index, so the secondary refactoring is required for causing the average value to be an integer and fall into the valued field of quantization value of the precoding matrix index. Feedback amounts of the precoding matrix index in three schemes are compared with each other in case of a scenario of space-nonselective channel. As shown in Table 1, scheme 1 adopts a method in which the user equipment in each RB individually performs precoding matrix index full-feedback; scheme 2 adopts a grouping RB full-feedback method; and scheme 3 adopts a grouping RB adaptive feedback method. In the method of scheme 3, an average value of all RBs is calculated to obtain an average precoding matrix index value Qave, and UE firstly feeds back Qave and then feeds back variation value of the precoding matrix index of each GRB in comparison with Qave. If the precoding matrix index of GRB in the next timing does not vary compared with the precoding matrix index of GRB at the preceding timing, then any value of the precoding matrix index will not be fed back. If the precoding matrix index of GRB in the next timing only varies slightly compared with the precoding matrix index of GRB at the preceding timing, it is still allowed that any value of the precoding matrix index will not be fed back, but variation threshold (corresponding to predetermined threshold) of the precoding matrix index shall be set at such timing. The threshold may be determined by the user according to actual PMI rank or may be obtained by calculations based on the actual PMI rank. It can be seen from Table 1 that in a scenario of space-nonselective channel, adopting grouping or adaptive precoding matrix index feedback scheme may greatly reduce feedback amount and improve feedback efficiency so as to save precious frequency resources in uplinks and save battery power of UE. The edge UE may adopt GRB based adaptive precoding matrix index feedback scheme which is same to RB based adaptive precoding matrix index feedback scheme mentioned previously with the only difference that the scheme is implemented by considering GRB as the minimum unit.

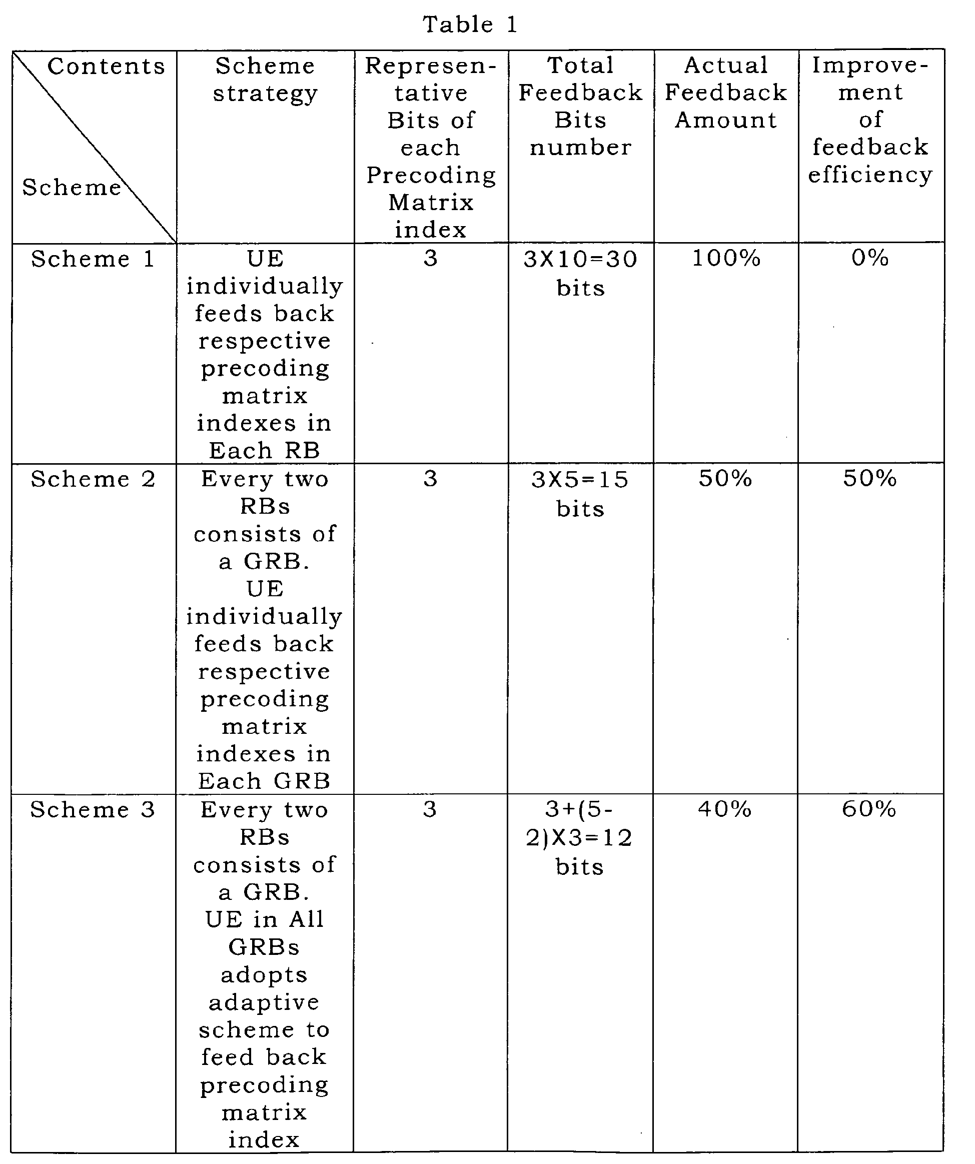

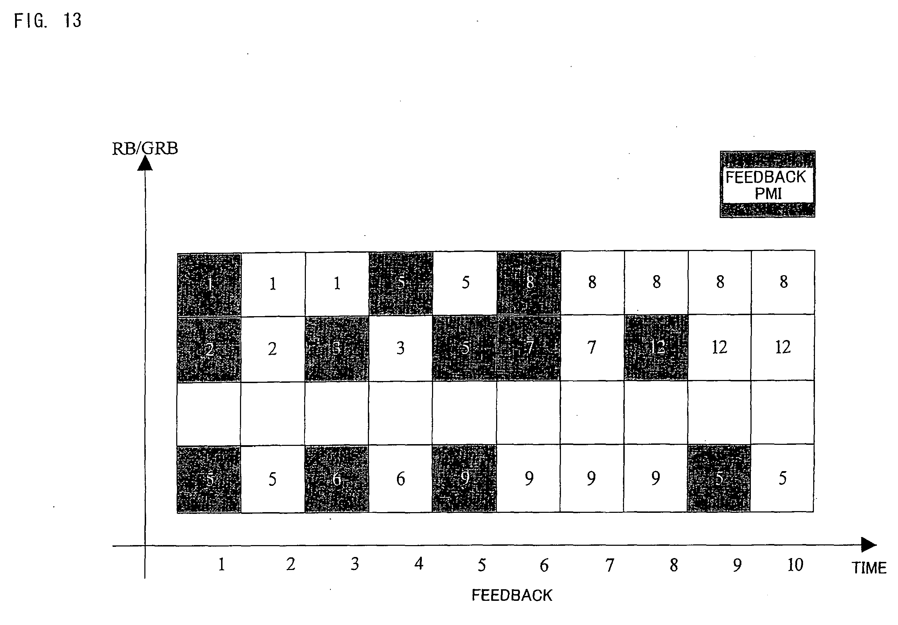

In Figure 13, the edge user equipment may respectively adopt RB based adaptive information feedback scheme and GRB based adaptive information feedback scheme in time domain. In details, in an initial TTI, an average value (which corresponds to above reference value, however, the present invention is not limited to the average value of PMIs and the reference value may be any numerical value designated by the user, PMI value of the first or any RB or GRB, or a numerical value derived from PMI value of individual or some RB or GRB) of the precoding matrix index of all RBs or GRBs is fed back. Then, the user equipment in the first RB feeds back variation value of the first PMI value compared with the PMI average value, the user equipment in the second RB feeds back variation value of the second PMI value compared with the PMI average value, and so on. In the next TTI, if PMI does not change or only changes slightly (lower than the predetermined threshold), then it will not be fed back; if PMI changes, then variation value of the current PMI compared with the average PMI fed back in the initial TTI will be fed back. Therefore, the number of feedback times in time domain will decrease greatly. On the other hand, because long time error accumulation causes the feedback precision to decrease and the feedback expense to increase, every certain time period passes, average PMI value of all RBs or RB groups in that TTI may be fed back again to correct long time error accumulation effect.

### (7) Frequency-selective characteristics based CQI feedback scheme

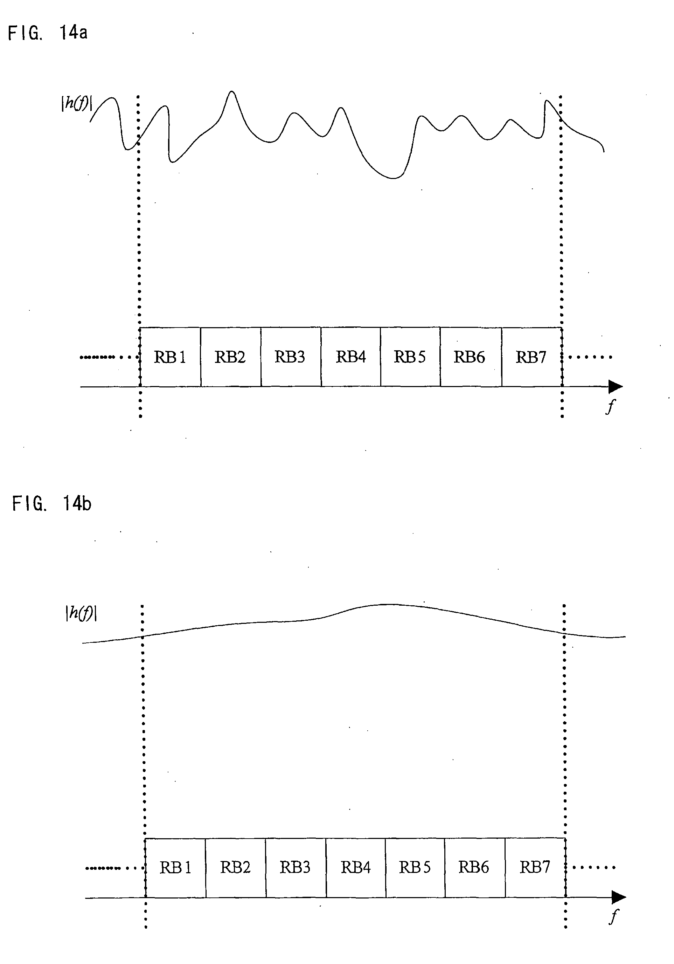

As shown in Figure 4c (S412), channels are generally frequency-selective in OFDM system, and thus each resource block of the center user equipment or edge user equipment is frequency non-coherent in respect of different frequency bands of the whole frequency band. As shown in Figure 14a, because the center user equipment requires relatively high data throughput, the center user equipment in each resource block of the center user adopts best CQI information feedback scheme when feeding back CQI, i.e., feeding back CQI value of the resource block with the best CQI performance. Since the edge user equipment requires relatively low data throughput, the edge user equipment in each resource block of the edge user equipment adopts RB based adaptive information feedback scheme when feeding back CQI, which is almost same as the feedback scheme of the precoding matrix index mentioned above with the only difference that CQI value is currently fed back. In details, firstly an average value of CQIs of all RBs (corresponding to above mentioned reference value, however, the present invention is not limited to the average CQI value, the reference value may be random value designated by the user, CQI of the first or any RN or GRB, or a numerical value deduced from CQI of individual or some RB or GRB) is fed back. Then the user equipment in the first RB feeds back variation value of the first CQI compared with the average value of CQIs, and the user equipment in the second RB feeds back variation value of the second CQI compared with the average value of CQIs. If CQI does not change or only changes slightly (lower than predetermined threshold) in the next timing, then it will not be fed back. The same CQI feedback scheme is also applicable to all the RBs and accordingly the feedback information amount of CQI is greatly reduced. If the channel is a frequency-nonselective channel, each resource block of the center user equipment or edge user equipment is frequency coherent in respect of different frequency bands as shown in Figure 14b, thus the center user equipment in each resource block of the center user equipment adopts improved best CQI information feedback scheme when feeding back CQI. In other words, several neighboring resource blocks in frequency position consist of a resource block group (GRB) and the user equipment in the GRB adopts the improved best CQI information feedback scheme, resulting that the feedback information amount of CQI is greatly reduced. The edge user equipment adopts GRB based adaptive information feedback scheme. The predetermined threshold may be determined according to actual CQI level by the user, or may be determined according to actual CQI level through calculations.

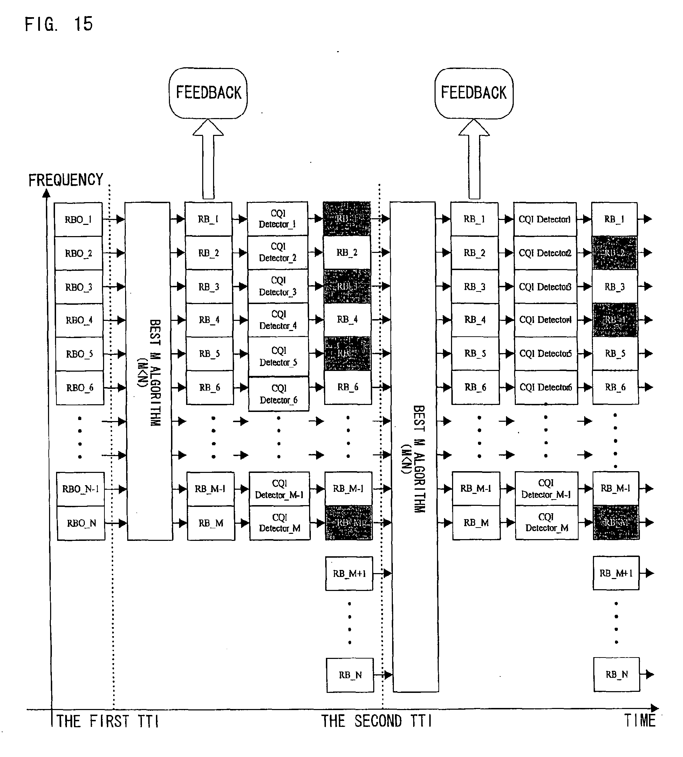

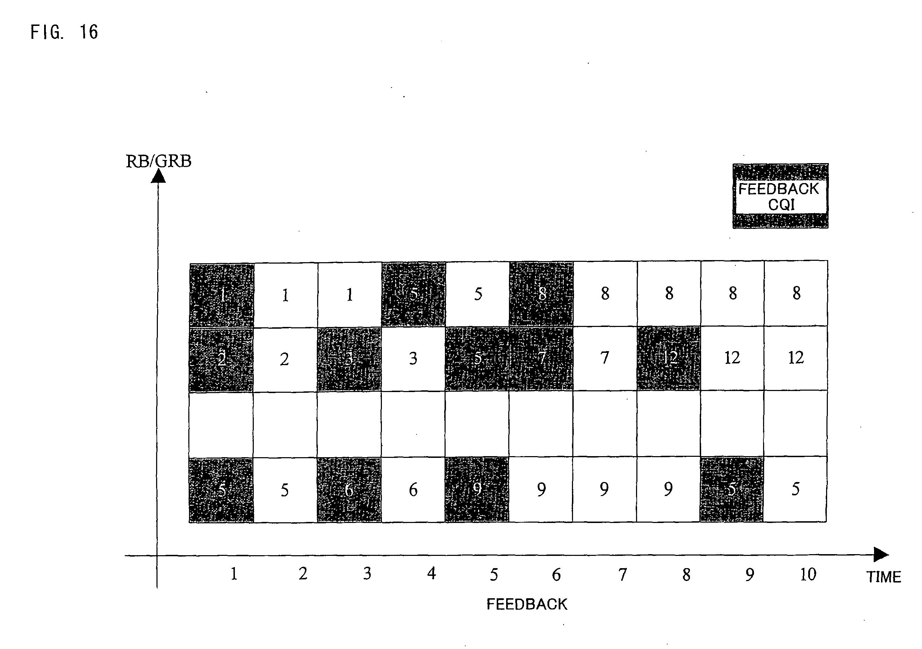

As described above, in case of frequency-selective channels, the center user equipment may adopt RB based improved best CQI feedback scheme as shown in Figure 15. This feedback scheme combined with time domain adaptive feedback scheme is illustrated in Figure 16. The principle of the RB based improved best CQI feedback scheme will be explained as follows. Firstly, in an initial state, all RBs at the UE side is subject to the Best CQI scheme (Best M) in which M RBs with the best CQIs will be searched out from N RBs and UE reports CQIs of these M RBs and their corresponding CQI values to the BS side. Each CQI value is represented by 5 bits. After one TTI time period passes in time domain, variation of the CQIs at the preceding timing is detected by a CQI detector which sets a certain threshold. If variation of CQI of a certain RB at the beginning timing of current TTI compared with the CQI at the preceding timing is lower than the threshold, it may be regarded that CQI does not change, for example, RB_2, RB_4 and etc with white mark in Figure 15. If variation of CQI of a certain RB at the beginning timing of current TTI compared with the CQI at the preceding timing is higher than the threshold, then new CQI value will be recorded, for example, RB_1, RB_3, RB_5,... and RB_M with black mark in Figure 15. Then the Best M algorithm is executed again and M RBs with the best CQI are searched out from N RBs. CQI values of the new M RBs are compared with CQI values of M RBs at the preceding timing. If there is a CQI of the new RB which is superposed with that at the preceding timing, the RB with superposed CQI is observed by the CQI detector to find out whether its CQI varies. Finally, UE feeds back CQI values in current TTI which comprise CQI values of RBs, whose CQIs are not superposed with those at the preceding timing, and CQI values of RBs, whose CQIs are superposed with those at the preceding timing but has varied in value, among the new M RBs. The UE does not feed back CQI information for those RBs whose CQIs are superposed but does not vary.

It can be seen from Table 2 that in case of frequency-selective channel scenario, RB based improved Best M feedback scheme may greatly reduce feedback amount and improve feedback efficiency so that precious frequency resources in uplinks may be saved and battery power of UE may also be saved.

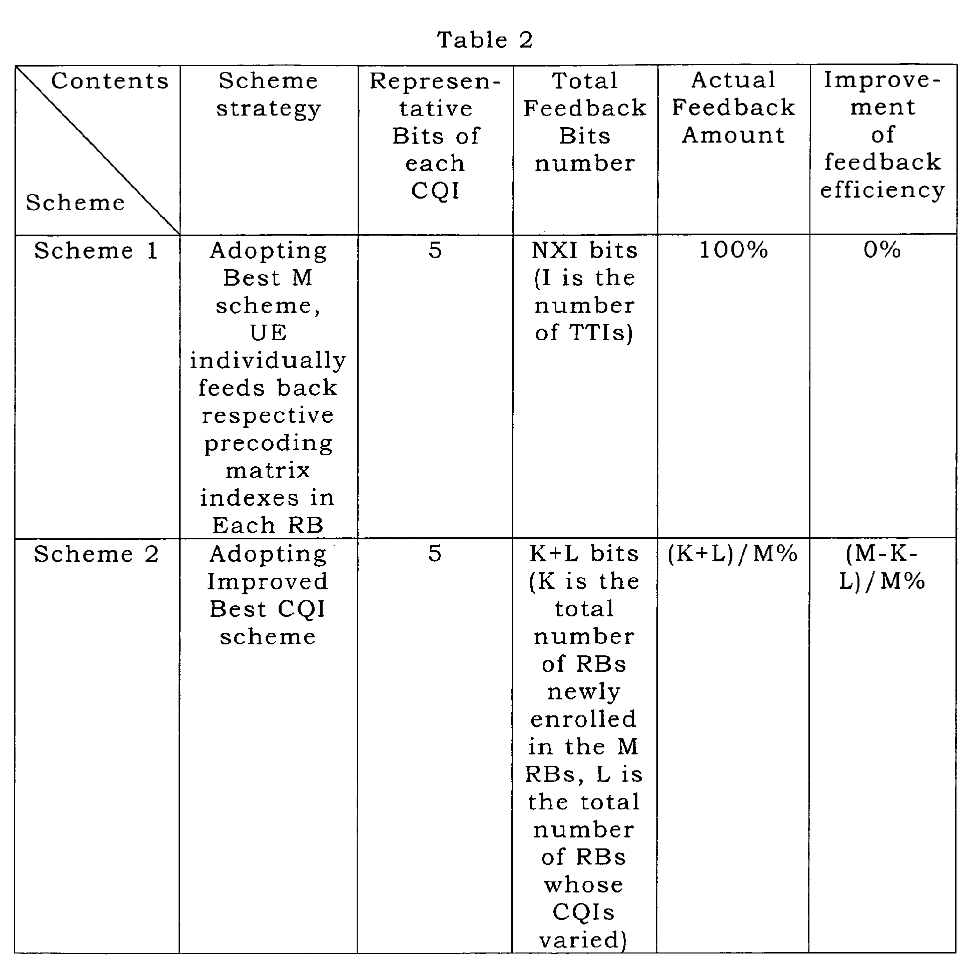

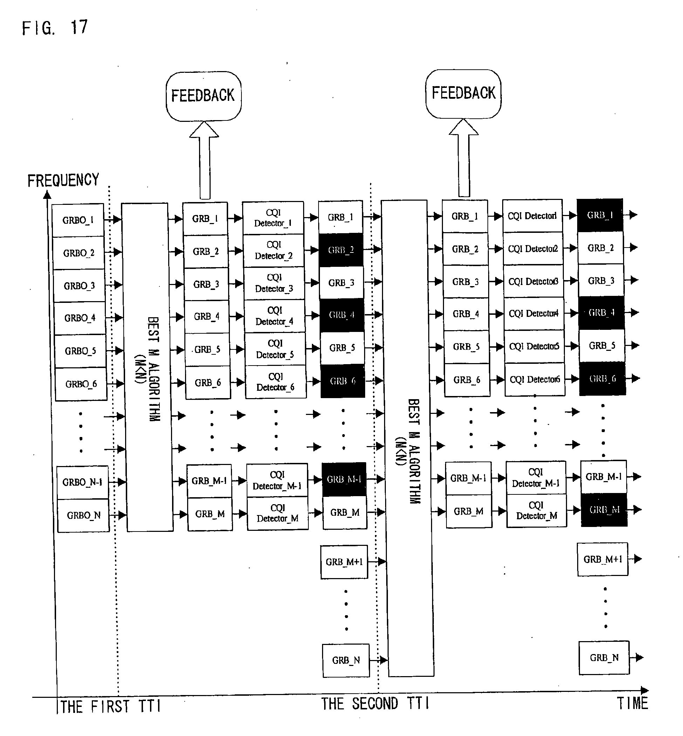

As explained above, in case of frequency-nonselective channel, the center user equipment may adopt GRB based improved best CQI feedback scheme as shown in Figure 17. This feedback scheme combined with time domain adaptive feedback scheme is illustrated in Figure 16. At timing 1, CQI values of different RBs/RBGs are 1, 2, ..., 5 respectively. When it comes to timing 2, CQI values of different RBs/RBGs do not vary and accordingly UE does not feed back CQI information to the BS at timing 2. When it comes to timing 3, CQI value of RB/RBG whose CQI value was 1 turns to be 5 and CQI values of other RB/RBGs do not change. At this timing, the user equipment in the RB/RBG whose CQI values turned to be 5 feeds back the CQI information to the BS. As shown in Figure 4d and Figure 16, adaptive decision algorithm is performed continuously on the time axis. The GRB based improved Best CQI feedback scheme is substantially same as the RB based improved Best CQI feedback scheme in theory and principle with only difference that the present feedback scheme groups RBs by using frequency-nonselective characteristics of channels so as to further reduce feedback amount and improve feedback efficiency. It may be seen from Table 3 that performances of GRB based improved Best M feedback scheme may be further improved.

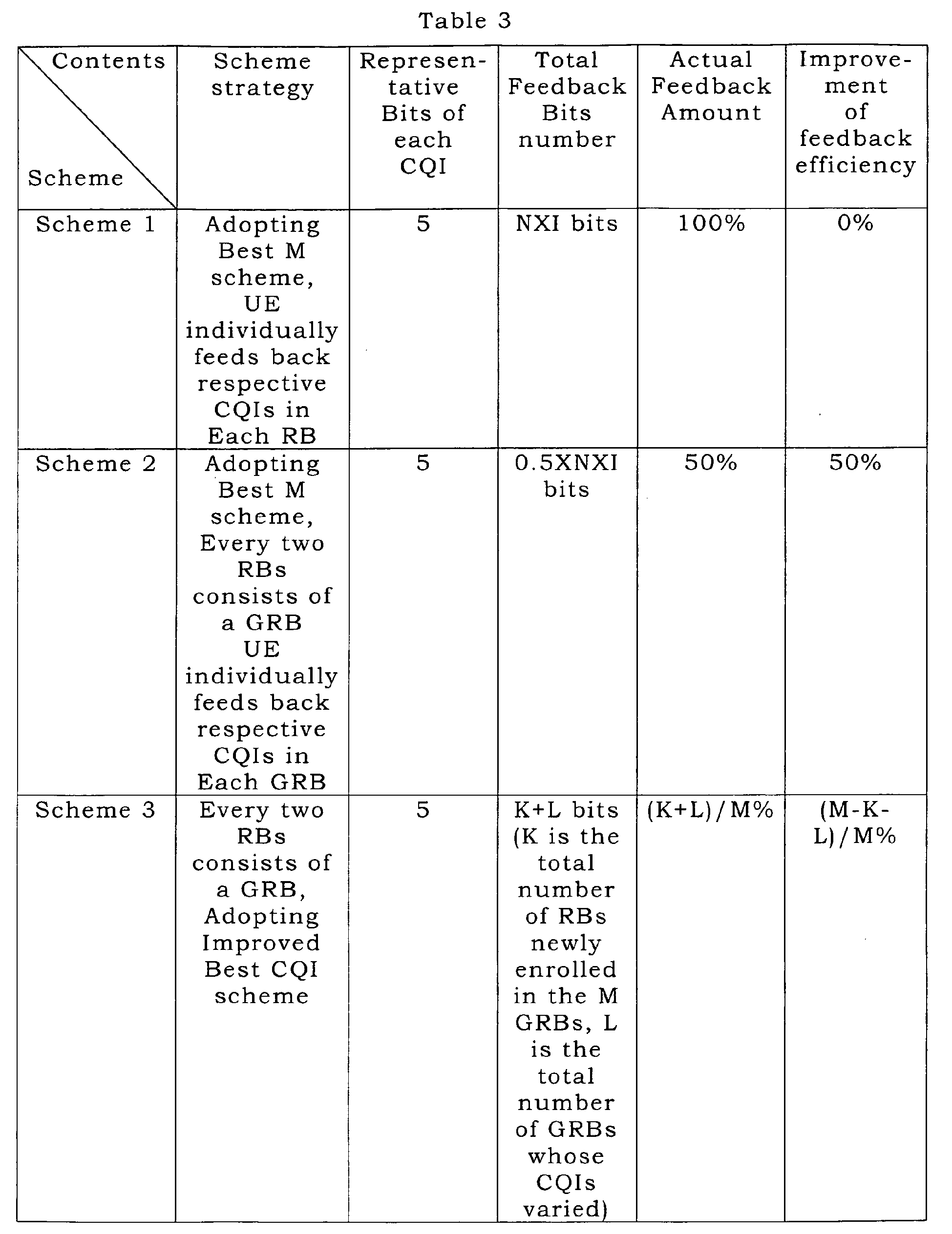

In Figure 16, the edge user equipment may adopt separately RB based adaptive information feedback scheme and GRB based adaptive information feedback scheme in time domain. In detail, in the initial TTI, an average value of CQIs of all RBs or GRBs (corresponding to above mentioned reference value, however, the present invention is not limited to the average CQI value, the reference value may be random value designated by the user, CQI of the first or any RN or GRB, or a numerical value deduced from CQI of individual or some RB or GRB) is fed back. Then the user equipment in the first RB feeds back variation value of the first CQI compared with the average value of CQIs, the user equipment in the second RB feeds back variation value of the second CQI compared with the average value of CQIs and so on. If the CQI does not change or only changes slightly (lower than predetermined threshold) in the next TTI, then it will not be fed back. If the CQI changes, variation value of the current CQI compared with the average value of CQIs fed back in the initial TTI will be fed back. Therefore the number of feedback times in time domain will be greatly reduced. On the other hand, because long time error accumulation causes the feedback precision to decrease and the feedback expense to increase, every certain time period passes, average PMI value of all RBs or RB groups in that TTI may be fed back again to correct long time error accumulation effect.

### (8) Time-selective characteristics based CQI feedback scheme

As shown in Figure 4d (S413), the above RB based improved Best CQI feedback scheme and GRB based improved Best CQI feedback scheme have considered scenarios of channels being time-selective and nonselective for the center UE. These two algorithms are based on an adaptive mechanism in time domain, i.e., CQI detector is exercised and a threshold for detection is set. Because the UE makes full use of CQI detection result at the preceding TTI when feeding back CQI at current TTI as shown in Figure 16 and carries out the adaptive decision algorithm in time domain, the number of feedback times in time domain will greatly reduced. The edge user equipment may adopt RB based adaptive information feedback scheme and GRB based adaptive information feedback scheme in time domain. In detail, in the initial TTI, an average value of CQIs of all RBs or GRBs (corresponding to above mentioned reference value, however, the present invention is not limited to the average CQI value, the reference value may be random value designated by the user, CQI of the first or any RN or GRB, or a numerical value deduced from CQI of individual or some RB or GRB) is fed back. Then the user equipment in the first RB feeds back variation value of the first CQI compared with the average value of CQIs, the user equipment in the second RB feeds back variation value of the second CQI compared with the average value of CQIs and so on. If the CQI does not change or only changes slightly (lower than predetermined threshold) in the next TTI, then it will not be fed back. If the CQI changes, variation value of the current CQI compared with the average value of CQIs fed back at the initial TTI will be fed back. Therefore the number of feedback times in time domain will be greatly reduced. The predetermined threshold may be determined according to the actual CQI level by the user or through calculations. On the other hand, because long time error accumulation causes the feedback precision to decrease and the feedback expense to increase, every certain time period passes, average PMI value of all RBs or RB groups in that TTI may be fed back again to correct long time error accumulation effect.

### (9) UE feeds back Rank of downlink MIMO system

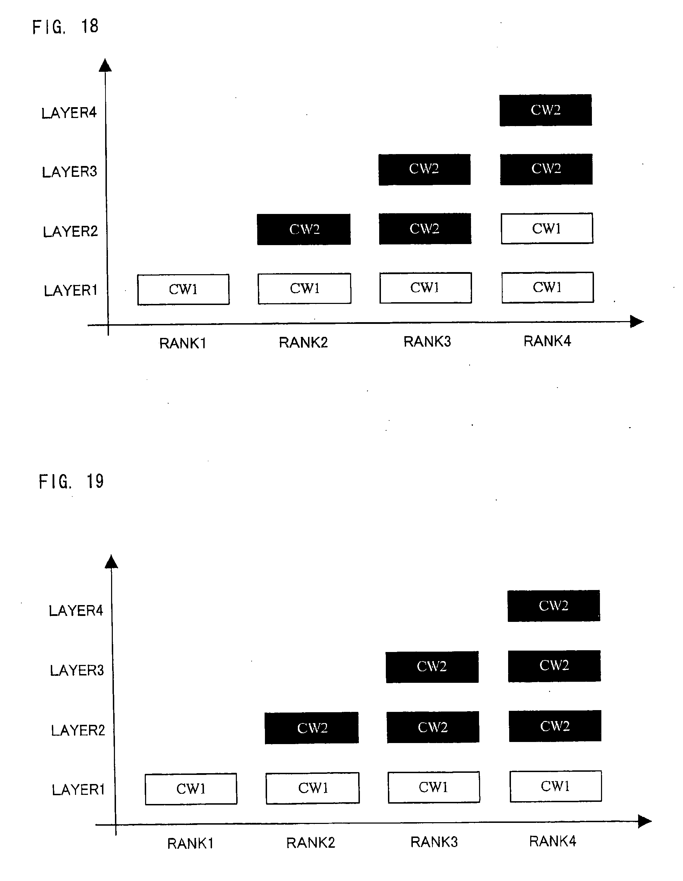

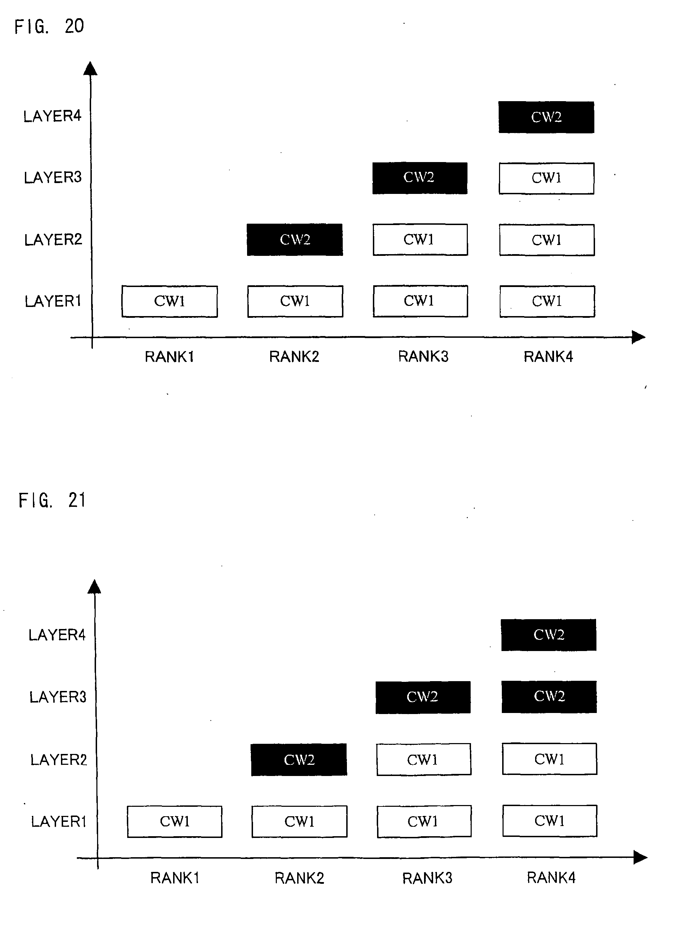

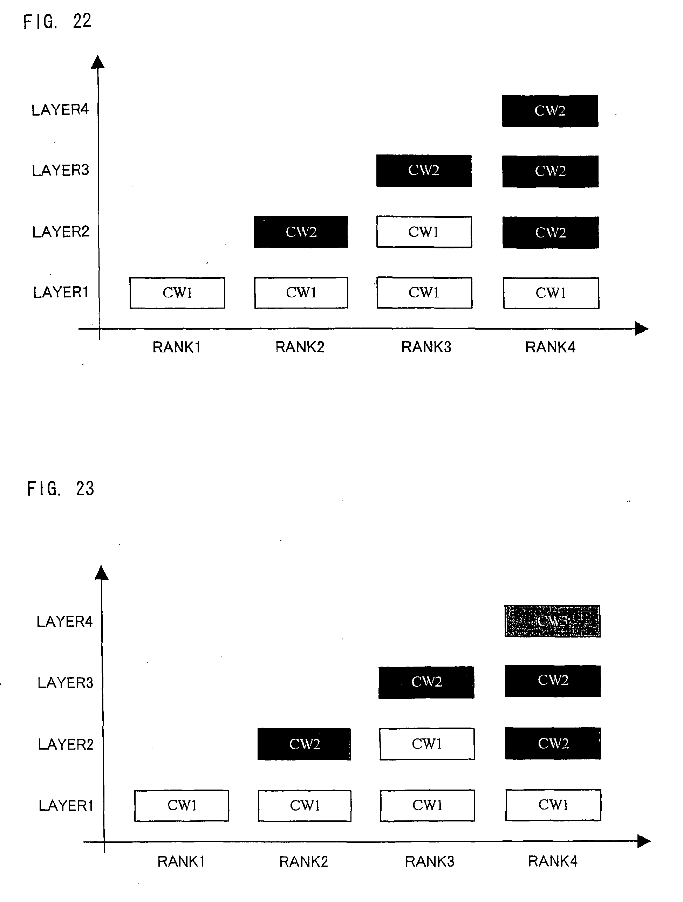

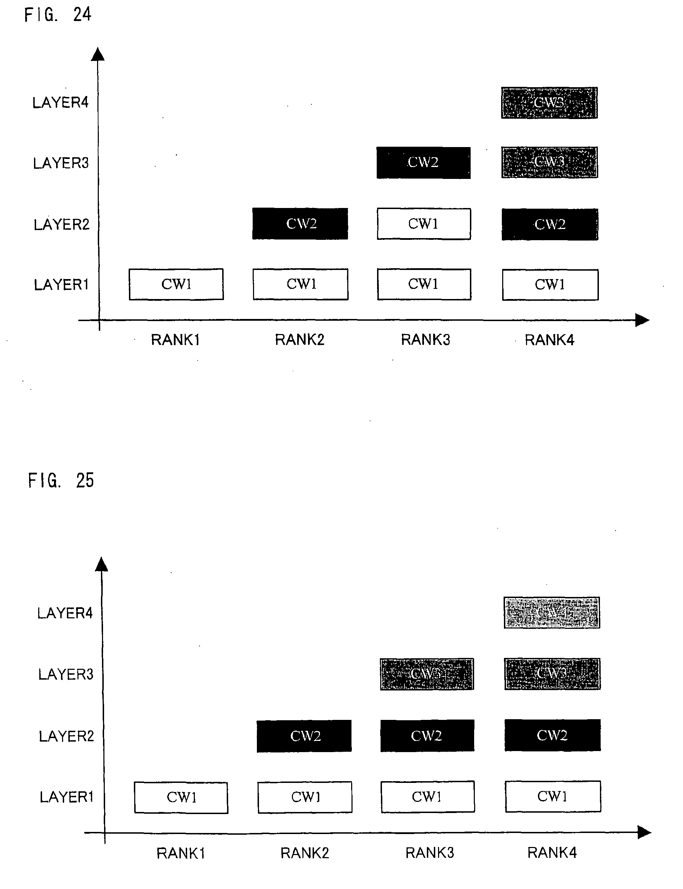

Since there are many MIMO schemes for the downlink MIMO system and BS has different performance standard requirements for different MIMO schemes, it is necessary for the UE to feed back Rank information of downlink MIMO, which constitutes a certain amount of the feedback information shown in Figure 3. Long Term Evolution ("LTE") Committee of the 3rd Generation Partnership Project (3GPP) has ascertained that the downlink MIMO system may utilize four transmit antennas and four receive antennas at most. As a result, the relationship among rank, layer and codeword of the downlink MIMO system may be defined as Figure 18-Figure 22 such that the UE feeds back 2 codewords at most to a pre-encoder of the BS and Layer 1, Layer 2, Layer 3 and Layer 4 utilize these two codewords in common. Alternatively the UE may feed back more than 2 codewords to the pre-encoder of the BS as shown in Figure 23-Figure 25. Figure 23-Figure 24 show that Layer 1, Layer 2, Layer 3 and Layer 4 utilize three codewords in common. Figure 25 shows that Layer 1, Layer 2, Layer 3 and Layer 4 utilize four codewords in common. The center UE or edge UE feeds back more codewords, the higher the precision of the resource scheduling by the BS is. However, in order to save overhead in uplinks, on the precondition of guaranteeing overall throughput and edge throughput of a wireless cell, UEs may be configured flexibly with different MIMO schemes according to moving speeds and path losses of UEs, meanwhile different MIMO schemes may configure different rank feedback schemes so as to decrease uplink feedback amount on the basis of ensuring performances.

### (10) BS optimizes the transmitter according to the feedback information and measures and evaluates wireless cell performance.

The BS optimizes the transmitter design according to space-time-frequency three-dimensional domain feedback information reported by the center UE and the edge UE. The BS optimizes the pre-encoder mainly according to the fed back rank of MIMO and indexes of pre-encoding codebooks, evaluates the service quality of the wireless cell and reports it to upper layer management information system as shown in Figure 4.

### (11) Space-time-frequency three dimensional domain based information feedback system

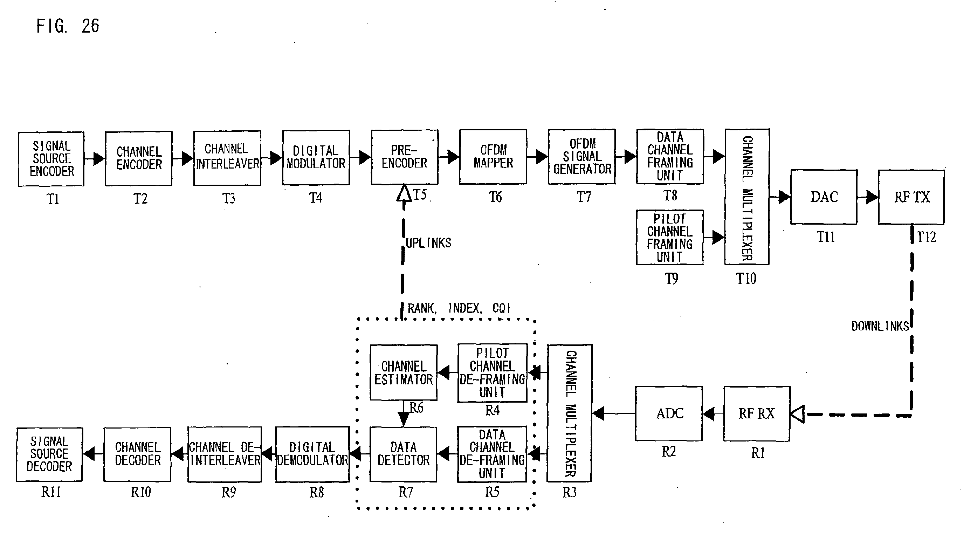

Figure 26 is an integral block diagram illustrating space-time-frequency three-dimensional domain based information feedback system. The information feedback system in Figure 26 may carry out functions shown in Figure 4a, 4b, 4c and 4d. OFDM mapper T6 in Figure 26 may carry out the function of resource scheduling and thus the OFDM mapper T6 carries out the functions required in Step S401-S417. Software and hardware of the space-time-frequency three-dimensional domain based information feedback system implement functions as shown in Figure 26. At the BS side, a signal source encoder T1 sends an original data stream through a channel encoder T2 to a channel interleaver T3 for interleaving the data. Interleaved data is transmitted through a data modulator T4 to a pre-encoder T5 for pre-encoding. The resulted data is sent through an OFDM mapper T6, OFDM signal generator T7, a data channel framing unit T8, pilot channel framing unit T9, a channel multiplexer T10 and DAC digital-analog converter T11 to a radio frequency module T12 for transmitting. At the UE side, radio frequency data is converted into base band signal through a RF RX down conversion module R1 and an ADC modulus converter R2. The base band signal is sent through a channel multiplexer R3, pilot channel de-framing unit R4, data channel de-framing unit R5, a channel estimator R6, a data detector R7, a data demodulator R8, a channel de-interleaver R9, a channel decoder R10 and a signal source decoder R11 to obtain final required data. At the UE side, the feedback information such as rank, precoding matrix index, CQI and etc is fed back to the pre-encoder of the BS through uplinks as shown in Figure 26.

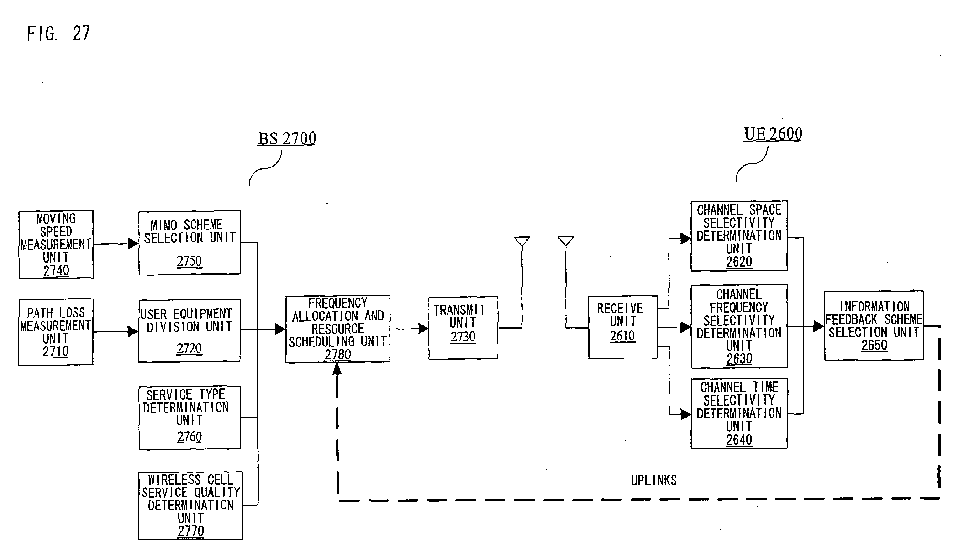

Figure 27 is a function diagram illustrating space-time-frequency three-dimensional domain based information feedback system according to the present invention.

As shown in Figure 27, the user equipment UE 2600 according to the present invention comprises a receive unit 2610, a channel space selectivity determination unit 2620, a channel frequency selectivity determination unit 2630, a channel time selectivity determination unit 2640, a information feedback scheme selection unit 2650, etc. The receive unit 2610 receives a determination result regarding whether the user equipment (UE) 2600 is a center user equipment or an edge user equipment from the base station (BS) 2700. The channel space selectivity determination unit 2620 determines whether the channel used by the user equipment (UE) 2600 is space-selective or space-nonselective. The channel frequency selectivity determination unit 2630 determines whether the channel used by the user equipment (UE) 2600 is frequency-selective or frequency-nonselective. The channel time selectivity determination unit 2640 determines whether the channel used by the user equipment (UE) 2600 is time-selective or time-nonselective. The information feedback scheme selection unit 2650 selects corresponding information feedback scheme according to the determination results regarding whether the user equipment (UE) 2600 is a center user equipment or an edge user equipment, channel space-selectivity or space-non-selectivity, channel frequency-selectivity or frequency-non-selectivity and channel time-selectivity or time-non-selectivity. The information feedback scheme selection unit 2650 feeds back the feedback information to a frequency allocation and resource scheduling unit 2780 of the base station (BS) 2700 through uplinks. The frequency allocation and resource scheduling unit 2780 of the base station (BS) 2700 performs resource scheduling as shown in Figure 27 so as to improve the wireless cell performance.

In detail, when the channel space selectivity determination unit 2620 determines that the channel is a space-selective channel, a user equipment determined as the center user equipment by the base station in the resource blocks of the center user equipment feeds back those precoding matrix indexes with the best channel quality indicator performance, and a user equipment determined as the edge user equipment by the base station adopts resource block based space domain adaptive information feedback scheme, i.e., a reference value for precoding matrix indexes of all resource blocks at the initial timing is fed back and then the user equipment in each resource block feeds back variation value of a precoding matrix index of itself at current timing compared with the reference value of the precoding matrix index. On the other hand, when the channel space selectivity determination unit 2620 determines that the channel is a space-nonselective channel, the user equipment groups neighboring resource blocks in spatial position into a resource block group. In such case, a user equipment determined as the center user equipment by the base station in each resource block group of the center user equipment feeds back a precoding matrix index with the best channel quality indicator performance, and a user equipment determined as the edge user equipment by the base station adopts resource block group based space-domain adaptive information feedback scheme, i.e., a reference value for precoding matrix indexes of all resource block groups at the initial timing is fed back and then the user equipment in each resource block group feeds back variation value of a precoding matrix index of itself at current timing compared with the reference value of the precoding matrix index. More preferably, if the variation value of the precoding matrix index of a specific resource block or resource block group at current timing compared with precoding matrix index at the preceding timing is lower than a predetermined threshold, the user equipment determined as the edge user equipment by the base station does not feed back the variation value of the precoding matrix index at current timing compared with the reference value of the precoding matrix index.

When the channel frequency selectivity determination unit 2630 determines that the channel is a frequency-selective channel, a user equipment determined as the center user equipment by the base station in the resource blocks of the center user equipment feeds back those channel quality indicator values with the best channel quality indicator performance, and a user equipment determined as the edge user equipment by the base station adopts resource block based frequency-domain adaptive information feedback scheme, i.e., a reference value for channel quality indicators of all resource blocks at the initial timing is fed back and then the user equipment in each resource block feeds back variation value of a channel quality indicator of itself at current timing compared with the reference value of the channel quality indicator. On the other hand, when the channel frequency selectivity determination unit 2630 determines that the channel is a frequency-nonselective channel, the user equipment groups neighboring resource blocks in frequency position into resource block group. In such case, a user equipment determined as the center user equipment by the base station in each resource block group of the center user equipment feeds back a channel quality indicator value with the best channel quality indicator performance, and a user equipment determined as the edge user equipment by the base station adopts resource block group based frequency-domain adaptive information feedback scheme, i.e., a reference value for channel quality indicators of all resource block groups at the initial timing is fed back and then the user equipment in each resource block group feeds back variation value of a channel quality indicator of itself at current timing compared with the reference value of the channel quality indicator. More preferably, if the variation value of the channel quality indicator of a specific resource block or resource block group at current timing compared with the precoding matrix index at the preceding timing is lower than a predetermined threshold, the user equipment determined as the edge user equipment by the base station does not feed back the variation value of channel quality indicator at current timing compared with the reference value of the channel quality indicator.

When the channel time selectivity determination unit 2640 determines that the channel is a time-selective channel, a user equipment determined as the center user equipment by the base station in the resource blocks of the center user equipment feeds back those channel quality indicator values with the best channel quality indicator performance, and a user equipment determined as the edge user equipment by the base station adopts resource block based time-domain adaptive information feedback scheme, i.e., a reference value for channel quality indicators of all resource blocks at the initial timing is fed back and then the user equipment in each resource block feeds back variation value of a channel quality indicator of itself at current timing compared with the reference value of the channel quality indicator. On the other hand, when the channel time selectivity determination unit 2640 determines that the channel is a time-nonselective channel, the user equipment groups neighboring resource blocks in frequency position into resource block group. In such case, a user equipment determined as the center user equipment by the base station in each resource block group of the center user equipment feeds back a channel quality indicator value with the best channel quality indicator performance, and a user equipment determined as the edge user equipment by the base station adopts resource block group based time domain adaptive information feedback scheme, i.e., a reference value for channel quality indicators of all resource block groups at the initial timing is fed back and then the user equipment in each resource block group feeds back variation value of a channel quality indicator of itself at current timing compared with the reference value of the channel quality indicator. More preferably, if the variation value of the channel quality indicator of a specific resource block or resource block group at current timing compared with precoding matrix index at preceding timing is lower than a predetermined threshold, the user equipment determined as the edge user equipment by the base station does not feed back the variation value of the channel quality indicator at current timing compared with the reference value of the channel quality indicator.

As shown in Figure 27, the base station (BS) 2700 according to the present invention comprises a path loss measurement unit 2710, a user equipment division unit 2720, a moving speed measurement unit 2740, a MIMO scheme selection unit 2750, a service type determination unit 2760, a wireless cell service quality determination unit 2770, a frequency allocation and resource scheduling unit 2780 and a transmitting unit 2730. The path loss measurement unit 2710 measures the path losses of respective user equipments (UEs) 2600. The user equipment division unit 2720 divides user equipments (UEs) 2600 into center user equipment and edge user equipment according to the path loss. The moving speed measurement unit 2740 measures the moving speeds of respective user equipments (UEs) 2600. The MIMO scheme selection unit 2750 selects an open-loop MIMO scheme for the center user equipment or edge user equipment with high moving speed and selects a closed-loop MIMO scheme for the center user equipment or edge user equipment with low moving speed after the user equipment division unit 2720 divides user equipments (UEs) 2600 into center user equipments and edge user equipments according to the path losses. The service type determination unit 2760 determines the service types of respective user equipments (UEs) 2600. The wireless cell service quality determination unit 2770 determines the service quality of the wireless cell. The frequency allocation and resource scheduling unit 2780 allocates different frequency bands to the center user equipments and edge user equipments for neighboring wireless cells by using frequency multiplexing manner and performs resource scheduling after the user equipment division unit 2720 divides user equipments (UEs) 2600 into center user equipments and edge user equipments according to the path losses. The transmitting unit 2730 transmits the determination result regarding whether respective user equipments (UEs) 2600 are center user equipments or an edge user equipments to corresponding user equipments and notifies corresponding MIMO scheme selected by the MIMO scheme selection unit 2750 to the corresponding user equipment. As shown in Figure 27, the MIMO scheme selection unit 2750, the user equipment division unit 2720, the service type determination unit 2760 and the wireless cell service quality determination unit 2770 transmit the information to the frequency allocation and resource scheduling unit 2780. The frequency allocation and resource scheduling unit 2780 allocates different frequency bands to the center user equipment and edge user equipment for neighboring wireless cells by using frequency multiplexing manner and performs resource scheduling.

In detail, after the user equipment division unit 2720 divides user equipments (UEs) 2600 into center user equipments and edge user equipments according to the path loss, the MIMO scheme selection unit 2750 selects MIMO schemes for different user equipments (BS) 2600 according to the path losses, moving speeds and service types of the center user equipment and edge user equipment and the service quality of the wireless cell on the basis of following principles. According to the path losses of the center user equipment and the edge user equipment measured by the path loss measurement unit 2710, the center user equipment or the edge user equipment with large path loss adopts a MIMO scheme with low multiplexing gain and the center user equipment or the edge user equipment with low path loss adopts a MIMO scheme with high multiplexing gain. According to the moving speeds of the center user equipment and the edge user equipment measured by the moving speed measurement unit 2740, the center user equipment or the edge user equipment with high moving speed adopts an open-loop MIMO scheme and the center user equipment or the edge user equipment with low moving speed adopts a closed-loop MIMO scheme. According to the service types of the center user equipment and the edge user equipment measured by the service type determination unit 2760, the center user equipment or the edge user equipment with high data throughput adopts a closed-loop MIMO scheme and the center user equipment or the edge user equipment whose data throughput is low and which requires high precision adopts an open-loop MIMO scheme. According to the service quality of the wireless cell, different MIMO schemes of the user equipments are made to be able to guarantee the service quality requirements of the wireless cell, which include the overall throughput, edge throughput and transmission precision.

The base station (BS) 2700 configures the space-frequency-time three-dimensional domain information feedback scheme according to rank, layer and codeword of the downlink MIMO system and the service quality of the wireless cell so as to reduce the overhead in feedback links on the precondition of ensuring the system performance.

The base station (BS) 2700 adopts multiple codewords based information feedback scheme. The codeword number used in the transmitter of the base station side is 1, 2, 3 or 4.

The base station (BS) 2700 calculates the overall throughput and the edge throughput of the wireless cell, measures and evaluates the service quality of the wireless cell, adjusts the MIMO scheme of the center user equipment or edge equipment according to the evaluation result of the service quality of the wireless cell and the moving speeds, path losses and service types of the center user equipment and edge equipment and designs optimally the transmitter according to the space-frequency-time domain three-dimensional feedback information from the center user equipment and the edge equipment. The optimal design includes rationally allocating transmit power, frequency resource, channel and bit and configuring appropriate adaptive encoding modulation schemes and scheduling algorithms.

The space-time-frequency three-dimensional domain based information feedback method, system, user equipment and base station of the present invention have characteristics of simple feedback mechanism, low feedback amount and saving frequency overhead in uplink and are all-purpose. The present invention are applicable to general closed-loop MIMO communication systems and may provide information feedback method and system for MIMO downlinks of the 3^{rd} generation (3G), Super third generation (S3G) and the fourth generation (4G) cellular mobile communication system and digital television (DTV), wireless local area network (WLAN), wide area network system (WWAN), etc.

It is to be understood that the claims are not limited to the precise configuration and components illustrated above. Various modifications, changes and variations may be made in the arrangement, operation and details of the systems, methods, and apparatus described herein without departing from the scope of the claims.

## Claims

1. A space-time-frequency three-dimensional domain based information feedback method for a MIMO system, the method comprising:
dividing user equipments into center user equipments and edge user equipments according to path losses,
adopting, by the center user equipment and the edge user equipment, corresponding information feedback scheme according to space-selectivity or space-non-selectivity of a channel,
adopting, by the center user equipment and the edge user equipment, corresponding information feedback scheme according to frequency-selectivity or frequency-non-selectivity of a channel, and
adopting, by the center user equipment and the edge user equipment, corresponding information feedback scheme according to time-selectivity or time-non-selectivity of a channel.

2. The method of claim 1, wherein when the channel is a space-selective channel, the center user equipment in a resource block of the center user equipment feeds back a precoding matrix index with the best channel quality indicator performance, and
the edge user equipment adopts resource block based space-domain adaptive information feedback scheme in which a reference value for precoding matrix indexes of all resource blocks at an initial timing is fed back and then the edge user equipment in each resource block feeds back a variation value of the precoding matrix index of itself at current timing compared with the reference value of the precoding matrix index.

3. The method of claim 1, wherein when the channel is a space-non-selective channel, neighboring resource blocks in spatial position are grouped into a resource block group, the center user equipment in each resource block group of the center user equipment feeds back a precoding matrix index with the best channel quality indicator performance and
the edge user equipment adopts resource block group based space-domain adaptive information feedback scheme in which a reference value for precoding matrix indexes of all resource block groups at an initial timing is fed back and then the edge user equipment in each resource block group feeds back a variation value of the precoding matrix index of itself at current timing compared with the reference value of the precoding matrix index.

4. The method of claim 2 or claim 3, wherein if a variation value of the precoding matrix index of a specific resource block or a resource block group at current timing compared with the precoding matrix index at preceding timing is lower than a predetermined threshold, the variation value of the precoding matrix index at current timing compared with the reference value of the precoding matrix index is not fed back.

5. The method of claim 1, wherein when the channel is a frequency-selective channel, the center user equipment in a resource block of the center user equipment feeds back a channel quality indicator with the best channel quality indicator performance, and
the edge user equipment adopts resource block based frequency-domain adaptive information feedback scheme in which a reference value for channel quality indicators of all resource blocks at an initial timing is fed back and then the edge user equipment in each resource block feeds back a variation value of the channel quality indicator of itself at current timing compared with the reference value of the channel quality indicator.

6. The method of claim 1, wherein when the channel is a frequency-non-selective channel, neighboring resource blocks in frequency position are grouped into a resource block group, the center user equipment in each resource block group of the center user equipment feeds back a channel quality indicator with the best channel quality indicator performance, and
the edge user equipment adopts resource block group based frequency-domain adaptive information feedback scheme in which a reference value for channel quality indicators of all resource block groups at an initial timing is fed back and then the edge user equipment in each resource block group feeds back a variation value of the channel quality indicator of itself at current timing compared with the reference value of the channel quality indicator.

7. The method of claim 1, wherein when the channel is a time-selective channel, the center user equipment in a resource block of the center user equipment feeds back a channel quality indicator with the best channel quality indicator performance, and
the edge user equipment adopts resource block based time-domain adaptive information feedback scheme in which a reference value for channel quality indicators of all resource blocks at an initial timing is fed back and then the edge user equipment in each resource block feeds back a variation value of the channel quality indicator of itself at current timing compared with the reference value of the channel quality indicator.

8. The method of claim 1, wherein when the channel is a time-non-selective channel, neighboring resource blocks in frequency position are grouped into a resource block group,
the center user equipment in each resource block group of the center user equipment feeds back a channel quality indicator with the best channel quality indicator performance, and
the edge user equipment adopts resource block group based time-domain adaptive information feedback scheme in which a reference value for channel quality indicators of all resource block groups at an initial timing is fed back and then the edge user equipment in each resource block group feeds back a variation value of the channel quality indicator of itself at current timing compared with the reference value of the channel quality indicator.

9. The method of any one of claims 5-8, wherein if a variation value of the channel quality indicator of a specific resource block or a resource block group at current timing compared with the channel quality indicator at preceding timing is lower than a predetermined threshold, the variation value of the channel quality indicator at current timing compared with the reference value of the channel quality indicator is not fed back.

10. The method of any one of claims 1-9, the method further comprising:
after dividing the user equipments into the center user equipments and the edge user equipments according to the path losses, configuring an open-loop MIMO scheme to the center user equipment or edge user equipment with high moving speed and configuring a closed-loop MIMO scheme to the center user equipment or edge user equipment with low moving speed.

11. The method of any one of claims 1-9, the method further comprising:
after dividing the user equipments into the center user equipments and the edge user equipments according to the path loss, deciding MIMO schemes for different user equipments according to the path losses, moving speeds and service types of the center user equipment and edge user equipment and wireless cell service quality, wherein,
a base station measures the path losses of the center user equipment and edge user equipment, configures a MIMO scheme with low multiplexing gain to the center user equipment or edge user equipment with high path loss and configures a MIMO scheme with high multiplexing gain to the center user equipment or edge user equipment with low path loss,
the base station measures the moving speeds of the center user equipment and edge user equipment, configures an open-loop MIMO scheme to the center user equipment or edge user equipment with high moving speed and configures a closed-loop MIMO scheme to the center user equipment or edge user equipment with low moving speed,
according to the service types of the center user equipment and edge user equipment, the base station configures a closed-loop MIMO scheme to the center user equipment or edge user equipment with large data throughput and configures an open-loop MIMO scheme to the center user equipment or edge user equipment which has small data throughput and requires high precision, and
according to the wireless cell service quality, the base station ensures that the MIMO schemes of different user equipments guarantee service quality requirements of the entire wireless cell, which include overall throughput, edge throughput and transmission precision.

12. The method of any one of claims 1-9, the method further comprising:
after dividing the user equipments into the center user equipments and the edge user equipments according to the path loss, allocating for neighboring wireless cells, by a base station, different frequency bands to the center user equipment and edge user equipment by using frequency division multiplexing manner, and performing resource scheduling.

13. The method of claim 1, wherein space-frequency-time three-dimensional domain based information feedback scheme is configured according to rank, layer and codeword of downlink MIMO system and wireless cell service quality so as to reduce overhead in feedback links on a precondition of guaranteeing system performance.

14. The method of claim 13, wherein multi-codeword based information feedback scheme is adopted and codeword number used in a transmitter of a base station is 1, 2, 3 or 4.

15. The method of claim 1, wherein a base station calculates overall throughput and edge throughput of a wireless cell, measures and evaluates wireless cell service quality, adjusts MIMO schemes of the center user equipment and edge user equipment according to the evaluation result of the wireless cell service quality and moving speeds, path losses and service types of the center user equipment and edge user equipment, and optimally designs a transmitter according to space-time-frequency three-dimensional domain feedback information from the center user equipment and edge user equipment, wherein,
the optimal design comprises rationally allocating transmission power, frequency resource, channel and bit and configuring appropriately adaptive encoding modulation scheme and scheduling algorithm.

16. A user equipment for feeding back information in a MIMO system on a basis of space-time-frequency three-dimensional domain, the user equipment comprising:
a receiving unit receiving a determination result regarding whether the user equipment is a center user equipment or an edge user equipment from a base station;
a channel space selectivity determination unit determining a channel used by the user equipment is space-selective or space-nonselective;
a channel frequency selectivity determination unit determining a channel used by the user equipment is frequency-selective or frequency-nonselective;
a channel frequency selectivity determination unit determining a channel used by the user equipment is time-selective or time-nonselective; and
an information feedback scheme selection unit selecting corresponding information feedback scheme according to the determination results regarding whether the user equipment is a center user equipment or an edge user equipment from a base station, space-selectivity or space-non-selectivity of the channel, frequency-selectivity or frequency-non-selectivity of the channel and time-selectivity or time-non-selectivity of the channel.

17. The user equipment of claim 16, wherein when the channel space selectivity determination unit determines that the channel is a space-selective channel, a user equipment determined as the center user equipment by the base station in a resource block of the center user equipment feeds back a precoding matrix index with the best channel quality indicator performance, and
a user equipment determined as the edge user equipment by the base station adopts resource block based space-domain adaptive information feedback scheme in which a reference value for precoding matrix indexes of all resource blocks at an initial timing is fed back and then the edge user equipment in each resource block feeds back a variation value of the precoding matrix index of itself at current timing compared with the reference value of the precoding matrix index.

18. The user equipment of claim 16, wherein when the channel space selectivity determination unit determines that the channel is a space-nonselective channel, the user equipment groups neighboring resource blocks in spatial position into a resource block group,
a user equipment determined as the center user equipment by the base station in each resource block group of the center user feeds back a precoding matrix index with the best channel quality indicator performance, and
a user equipment determined as the edge user equipment by the base station adopts resource block group based space-domain adaptive information feedback scheme in which a reference value for precoding matrix indexes of all resource block groups at an initial timing is fed back and then the edge user equipment in each resource block group feeds back a variation value of the precoding matrix index of itself at current timing compared with the reference value of the precoding matrix index.

19. The user equipment of claim 17 or claim 18, if a variation value of the precoding matrix index of a specific resource block or a resource block group at current timing compared with the precoding matrix index at preceding timing is lower than a predetermined threshold, the user equipment determined as the edge user equipment by the base station does not feed back the variation value of the precoding matrix index of itself at current timing compared with the reference value of the precoding matrix index.

20. The user equipment of claim 16, wherein when the channel frequency selectivity determination unit determines that the channel is a frequency-selective channel, a user equipment determined as the center user equipment by the base station in a resource block of the center user equipment feeds back a channel quality indicator with the best channel quality indicator performance, and
a user equipment determined as the edge user equipment by the base station adopts resource block based frequency-domain adaptive information feedback scheme in which a reference value for channel quality indicators of all resource blocks at an initial timing is fed back and then the edge user equipment in each resource block feeds back a variation value of the channel quality indicator of itself at current timing compared with the reference value of the channel quality indicator.

21. The user equipment of claim 16, wherein when the channel frequency selectivity determination unit determines that the channel is a frequency-nonselective channel, the user equipment groups neighboring resource blocks in frequency position into a resource block group,
a user equipment determined as the center user equipment by the base station in each resource block group of the center user equipment feeds back a channel quality indicator with the best channel quality indicator performance and
a user equipment determined as the edge user equipment by the base station adopts resource block group based frequency-domain adaptive information feedback scheme in which a reference value for channel quality indicators of all resource block groups at an initial timing is fed back and then the edge user equipment in each resource block group feeds back a variation value of the channel quality indicator of itself at current timing compared with the reference value of the channel quality indicator.

22. The user equipment of claim 16, wherein when the channel time selectivity determination unit determines that the channel is a time-selective channel, a user equipment determined as the center user equipment by the base station in a resource block of the center user equipment feeds back a channel quality indicator with the best channel quality indicator performance and
a user equipment determined as the edge user equipment by the base station adopts resource block based time-domain adaptive information feedback scheme in which a reference value for channel quality indicators of all resource blocks at an initial timing is fed back and then the edge user equipment in each resource block feeds back a variation value of the channel quality indicator of itself at current timing compared with the reference value of the channel quality indicator.

23. The user equipment of claim 16, wherein when the channel time selectivity determination unit determines that the channel is a time-nonselective channel, the user equipment groups neighboring resource blocks in frequency position into a resource block group,
a user equipment determined as the center user equipment by the base station in each resource block group of the center user equipment feeds back a channel quality indicator with the best channel quality indicator performance and
a user equipment determined as the edge user equipment by the base station adopts resource block group based time-domain adaptive information feedback scheme in which a reference value for channel quality indicators of all resource block groups at an initial timing is fed back, and the edge user equipment in each resource block group feeds back a variation value of the channel quality indicator of itself at current timing compared with the reference value of the channel quality indicator.

24. The user equipment of any one of claims 20-23, wherein if a variation value of the channel quality indicator of a specific resource block or a resource block group at current timing compared with the channel quality indicator at preceding timing is lower than a predetermined threshold, the user equipment determined as the edge user equipment by the base station does not feed back the variation value of the channel quality indicator at current timing compared with the reference value of the channel quality indicator.

25. A base station for controlling a user equipment to feed back information in a MIMO system on a basis of space-time-frequency three-dimensional domain, the base station comprising:
a path loss measurement unit measuring path losses of respective user equipments;
a user equipment division unit dividing the user equipments into center user equipments and edge user equipments according to the path losses; and
a transmission unit transmitting a determination result regarding whether respective user equipments are the center user equipments or the edge user equipments to corresponding user equipments.

26. The base station of claim 25, further comprising:
a moving speed measurement unit measuring moving speeds of respective user equipments; and
a MIMO scheme selection unit selecting an open-loop MIMO scheme for the center user equipment or the edge user equipment with high moving speed and selecting a closed-loop MIMO scheme for the center user equipment or the edge user equipment with low moving speed after the user equipment division unit divides the user equipments into the center user equipments and edge user equipments according to the path losses, wherein
the transmission unit transmits the MIMO scheme selected by the MIMO scheme selection unit to the corresponding user equipment.

27. The base station of claim 25, further comprising:
a moving speed measurement unit measuring moving speeds of respective user equipments;
a service type determination unit determining service types of respective user equipments;
wireless cell service quality determination unit determining wireless cell service quality; and
a MIMO scheme selection unit selecting MIMO schemes for different user equipments according to path losses, moving speeds and service types of the center user equipment and edge user equipment and the wireless cell service quality after the user equipment division unit divides the user equipments into the center user equipments and the edge user equipments according to the path loss, wherein,
according to the path losses of the center user equipment and edge user equipment measured by the path loss measurement unit, the center user equipment or edge user equipment with high path loss adopts a MIMO scheme with low multiplexing gain and the center user equipment or edge user equipment with low path loss adopts a MIMO scheme with high multiplexing gain,
according to the moving speeds of the center user equipment and edge user equipment measured by the moving speed measurement unit, the center user equipment or edge user equipment with high moving speed adopts an open-loop MIMO scheme and the center user equipment or edge user equipment with low moving speed adopts a closed-loop MIMO scheme,
according to the service types of the center user equipment and edge user equipment determined by the service type determination unit, the center user equipment or edge user equipment with large data throughput adopts a closed-loop MIMO scheme and the center user equipment or edge user equipment which has small data throughput and requires high precision adopts an open-loop MIMO scheme, and
according to the wireless cell service quality, the base station ensures that the MIMO schemes of different user equipments guarantee service quality requirements of the entire wireless cell, which include overall throughput, edge throughput and transmission precision.

28. The base station of claim 25, further comprising:
a frequency allocation and resource scheduling unit allocating, for neighboring wireless cells, different frequency bands to the center user equipment and edge user equipment by using frequency division multiplexing manner, and performing resource scheduling, after the user equipment division unit divides the user equipments into the center user equipments and the edge user equipments according to the path losses.

29. The base station of claim 25, wherein the base station configures a space-frequency-time three-dimensional domain based information feedback scheme according to rank, layer and codeword of a downlink MIMO system and wireless cell service quality so as to reduce overhead in feedback links on a precondition of guaranteeing system performance.

30. The base station of claim 29, wherein the base station adopts multi-codeword based information feedback scheme, and
codeword number used in a transmitter of the base station is 1, 2, 3 or 4.

31. The base station of claim 25, wherein the base station calculates overall throughput and edge throughput of a wireless cell, measures and evaluates wireless cell service quality, adjusts MIMO schemes of the center user equipment and edge user equipment according to the evaluation result of the wireless cell service quality and moving speeds, path losses and service types of the center user equipment and edge user equipment, and optimally designs a transmitter according to space-time-frequency three-dimensional domain feedback information from the center user equipment and the edge user equipment, wherein,
the optimal design comprises rationally allocating transmission power, frequency resource, channel and bit and configuring appropriately adaptive encoding modulation scheme and scheduling algorithm.

32. A space-time-frequency three-dimensional domain based information feedback system for a MIMO system, the information feedback system comprising:
at least one user equipment of any one of claims 16-24, and
at least one base station of any one of claims 25-31.
